(19) Europäisches Patentamt
European Patent Office
Office européen des brevets

(11) EP 2 174 105 B1

(12) FASCICULE DE BREVET EUROPEEN

(45) Date de publication et mention de la délivrance du brevet:
**24.08.2016 Bulletin 2016/34**

(21) Numéro de dépôt: **08775222.6**

(22) Date de dépôt: **18.07.2008**

(51) Int Cl.:
***G01P 15/09*** *(2006.01)* ***G01P 15/18*** *(2006.01)*
***G01L 3/10*** *(2006.01)* ***G01L 11/06*** *(2006.01)*
***G01L 1/16*** *(2006.01)* ***G01L 1/25*** *(2006.01)*
***G01L 5/16*** *(2006.01)* ***G01L 9/00*** *(2006.01)*

(86) Numéro de dépôt international:
**PCT/EP2008/059447**

(87) Numéro de publication internationale:
**WO 2009/013235 (29.01.2009 Gazette 2009/05)**

# (54) JAUGE DE CONTRAINTE DE TYPE STRUCTURE RÉSONANTE ACOUSTIQUE ET CAPTEUR D'AU MOINS UN PARAMÈTRE PHYSIQUE UTILISANT UNE TELLE JAUGE DE CONTRAINTE

BELASTUNGSMESSVORRICHTUNG MIT EINER AKUSTISCHEN RESONANZSTRUKTUR UND SENSOR FÜR MINDESTENS EINEN PHYSIKALISCHEN PARAMETER MIT EINER SOLCHEN BELASTUNGSMESSVORRICHTUNG

STRESS GAUGE HAVING AN ACOUSTIC RESONANT STRUCTURE AND SENSOR FOR AT LEAST ONE PHYSICAL PARAMETER USING SUCH STRESS GAUGE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.07.2007 FR 0756653**

(43) Date de publication de la demande:
**14.04.2010 Bulletin 2010/15**

(73) Titulaires:
- **Centre National de la Recherche Scientifique 75016 Paris (FR)**
- **Senseor 06250 Mougins (FR)**

(72) Inventeurs:
- **BALLANDRAS, Sylvain Jean F-25000 Besancon (FR)**
- **MASSON, Jérémy F-25720 Avanne-aveney (FR)**

(74) Mandataire: **Ilgart, Jean-Christophe et al BREVALEX 95, rue d'Amsterdam 75378 Paris Cedex 8 (FR)**

(56) Documents cités:
**EP-A- 0 117 387** **EP-A- 0 139 495**
**EP-A- 1 748 556** **DE-C1- 19 625 816**
**FR-A- 2 739 925** **FR-A- 2 776 065**
**GB-A- 1 577 692** **GB-A- 2 265 983**
**US-A- 4 484 475** **US-A- 5 682 000**

- **MANSFELD G D ET AL: "The development of a new class of BAW microwave acoustic devices for ecological monitoring" 2002 IEEE ULTRASONICS SYMPOSIUM. PROCEEDINGS (CAT. NO.02CH37388) IEEE PISCATAWAY, NJ, USA, vol. 1, 2002, pages 909-912 vol.1, XP002473285 ISBN: 0-7803-7582-3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention se rapporte au domaine de la mesure des contraintes exercées sur un système mécanique. Plus particulièrement la présente invention se rapporte à une jauge de contrainte de type structure résonante acoustique.

### ÉTAT DE LA TECHNIQUE ANTÉRIEURE

A ce jour pour mesurer les contraintes qui s'exercent dans une pièce, on rapporte sur cette pièce une jauge de contrainte qui peut être un résonateur à ondes de surface ou de volume, un élément piézorésistif ou tout autre moyen capable de convertir une déformation de la jauge de contrainte induite par la contrainte qui s'exerce dans la pièce en un signal électrique.

Pour certaines applications comme la mesure de la pression, cette dernière s'applique directement sur le résonateur à ondes de volume qui prend la forme d'un diaphragme. On peut se référer au brevet US-B- 4 479 070. Moyennant une calibration, on peut alors mesurer la valeur de la pression qui s'exerce. Une configuration différentielle s'avère toutefois nécessaire, ce qui impose une mise en oeuvre assez complexe incluant un dispositif de référence. On peut aussi se référer aux brevets EP0117387, US4484475 et FR2739925.

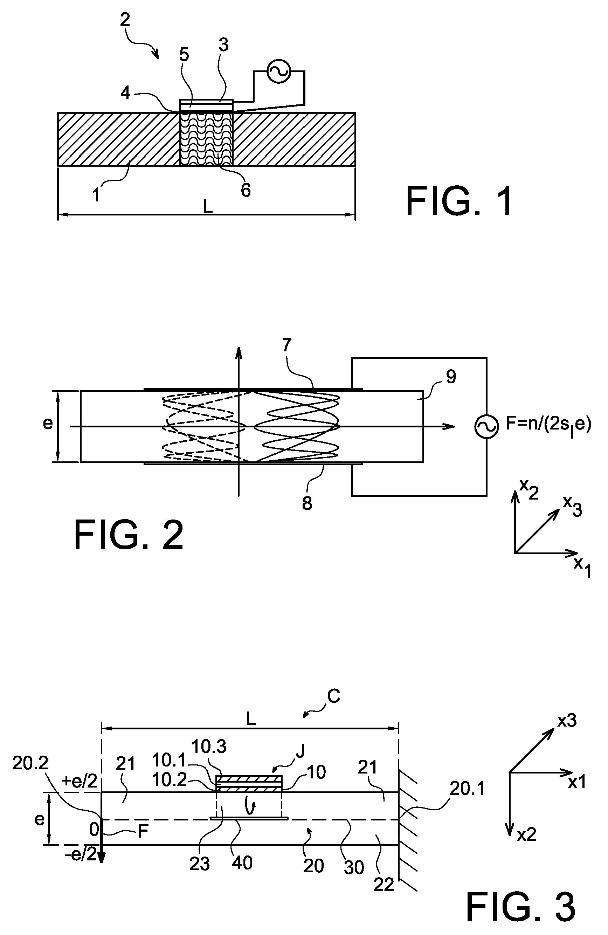

Les structures résonantes acoustiques hybrides connues sous l'acronyme de HBAR (harmonic bulk acoustic resonator soit résonateur à onde de volume à film mince à modes harmoniques) comportent sur un support généralement cristallin 1 apte à propager des ondes acoustiques, en silicium par exemple, un transducteur piézoélectrique 2 avec deux électrodes en regard 3, 4 prenant en sandwich une lame mince 5 de matériau piézoélectrique. On peut se reporter à la figure 1. Lorsque le transducteur piézoélectrique est excité par l'application d'un champ radiofréquence aux bornes du dipôle ainsi formé, des ondes acoustiques de volume se propagent dans le support au droit du transducteur piézoélectrique 2. La zone de propagation 6 des ondes acoustiques est une zone résonante mécanique distincte du transducteur piézoélectrique. La structure résonante inclut donc en plus du transducteur piézoélectrique 2 la portion 6 de support 1 au droit du transducteur piézoélectrique 2. L'apparition des ces structures résonantes est intervenue dès que l'on a su réaliser à la surface du substrat des couches piézoélectriques de bonne qualité.

Lorsque le support 1 est une poutre encastrée à une de ses extrémités, il est possible de modéliser le phénomène qui prend naissance au sein de la zone résonante 6 mécanique du support 1 se trouvant au droit du transducteur piézoélectrique 2 en utilisant le modèle simplifié du résonateur à ondes acoustiques de volume travaillant en mode longitudinal comme illustré sur la figure 2. Le résonateur à ondes de volume représenté est placé dans un repère x1, x2, x3. Ce résonateur à ondes acoustiques de volume comporte deux électrodes 7, 8 en regard qui enserrent un bloc 9 de matériau piézoélectrique. En appliquant un champ radiofréquence aux bornes du dipôle ainsi créé, on engendre des déplacements du bloc 9, suivant l'axe x2 dirigé selon l'épaisseur du bloc 9, dépendant des couplages permis par l'orientation cristalline de son matériau. On assiste à un phénomène de résonance d'ordre n lorsque la fréquence d'excitation F correspond à n fois la vitesse de phase $1/s_l$ du déplacement engendré divisée par deux fois l'épaisseur e du bloc 9, soit $f= n/(2s_le)$. $s_l$ est aussi appelée lenteur de l'onde de compression longitudinale (d'où l'indice 1) qui se propage dans le bloc de matériau piézoélectrique selon l'axe x2. Selon le mode d'excitation, il pourra également s'agir de la lenteur du mode transverse qui s'écrira alors $s_t$. Tous les développements peuvent être appliqués à ce cas à l'identique, le déplacement étant alors $u_3$ ou $u_1$ par exemple.

En régime normal de fonctionnement, on peut alors effectuer une analyse harmonique qui conduit, si l'on néglige la piézoélectricité aux deux équations suivantes :

$$\text{Dynamique} \quad \rho \frac{\partial^2 u_2}{\partial t^2} = C_{22} \frac{\partial^2 u_2}{\partial x_2^2} \qquad (1)$$

Champ de déplacement

$$u_2 = \sum_{r=1}^{n} u_2^{(r)} e^{-j\omega s_2^{(r)} x_2} e^{j\omega t} \qquad (2)$$

où ρ désigne la masse volumique du matériau piézoélectrique, $C_{22}$ est la constante élastique du matériau piézoélectrique selon l'axe x2 en indices contractés, ω est la pulsation de l'onde qui se propage selon l'axe x2 et $s^{(r)}_2$ représente la

lenteur du mode dans le matériau piézoélectrique selon l'axe x2. Les constantes élastiques à indices non contractés s'écrivent $C_{i,j,k,l}$ avec i, j, k et l variant de 1 à 3. les constantes élastiques à indices contractés s'écrivent $C_{I,J}$ avec I, J variant de 1 à 6, I= 9-i-j si i≠j et I=i=j si i=j ainsi que J = 9-k-l si k≠l et J=k=l si k=l.

On suppose par ailleurs l'existence possible de termes de propagation dans le plan x1, x3, mais on les considère comme négligeables dans l'application présentée.

La pénétration de l'onde dans le matériau piézoélectrique est rigoureusement décrite dans la combinaison linéaire de plusieurs ondes partielles, dont le nombre r est compris entre 1 et n. On en fait la somme dans l'équation de champ de déplacement.

Deux termes suffisent à décrire la distribution de champ de déplacement dans l'épaisseur e du matériau piézoélectrique. A partir des équations (1) et (2), on peut écrire l'équation caractéristique (3) suivante :

$$\sum_{r=1}^{n}\left(s_2^{(r)2}-\frac{\rho}{C_{22}}\right)\omega^2 u_2^{(r)} e^{-j\omega s_2^{(r)} x_2} e^{j\omega t}=0 \qquad (3)$$

En fonction de l'épaisseur e du matériau piézoélectrique, la lenteur $s^{(r)}_2$ s'exprime comme suit :

$$s_2^{(r)}=\pm\sqrt{\frac{\rho}{C_{22}}}=\pm s_l \qquad (4)$$

On déduit pour n=2 $s^{(r)}_2 = \pm s_l$. L'amplitude du champ de déplacement est obtenue en appliquant les conditions aux limites de surface, c'est-à-dire en l'absence de contraintes dynamiques en x2 = ± e/2. Si l'on prend en compte la seule contrainte normale en surface de la plaque, on peut écrire :

$$T_{22}(\pm e/2)=0 \rightarrow C_{22}\frac{\partial u_2}{\partial x_2}(\pm e/2)=0 \qquad (5)$$

En appliquant les conditions de l'équation (5) en tenant compte de l'équation (2) du champ de déplacement modifiée par l'équation (3), on obtient le système d'équations suivant après élimination des termes en facteur ($j\omega e$).

$$\begin{bmatrix}-e^{-j\omega s_l e} & +e^{+j\omega s_l e}\\ -e^{+j\omega s_l e} & +e^{-j\omega s_l e}\end{bmatrix}\begin{Bmatrix}u_2^{(1)}\\ u_2^{(2)}\end{Bmatrix}=\begin{Bmatrix}0\\0\end{Bmatrix}\rightarrow \Delta=2j\sin(\omega s_l e) \qquad (6)$$

Le discriminant Δ du système égal à $2j\sin(\omega s_l e)$ doit être nul pour attester l'existence d'une solution non triviale. Ceci correspond à $\omega_N = N\,\pi/s_l e$ avec N nombre entier quelconque. On en déduit alors que $u_2^{(1)}=u_2^{(2)}$.

Le champ de déplacement $u_2$ est alors tel que

$$u_2 = 2A\cos(\omega_N s_l x_2) \qquad (7)$$

A est l'amplitude du mode de propagation et cette amplitude est fixée par la source d'excitation. Le résultat est vrai pour toutes les harmoniques possibles d'ordre N et donc la distribution du champ de déplacement selon l'épaisseur de la plaque est gouvernée par la même loi quel que soit l'ordre N de l'harmonique considéré.

Les informations de sensibilité à la contrainte obtenues par l'intermédiaire d'un modèle d'ondes de volume en mode fondamental restent valables pour des harmoniques d'ordre supérieur.

A partir de ce qui vient d'être décrit le calcul de la sensibilité à la contrainte de la structure résonante est fondé sur un modèle de perturbations pour lequel il existe de nombreuses références. On peut se référer par exemple à « Wave propagation in fluids and solids » de R.N. Thurston dans Physical Acoustics, vol. 1, W.P. Mason Edition Academic Press, 1964 pour la description des équations de base.

L'équation d'équilibre énergétique de la structure résonante est donnée par le Lagrangien de la structure exprimé par rapport aux coordonnées matérielles $a_i$ dites encore Lagrangiennes comme expliqué dans la référence citée plus haut.

Pour déterminer la sensibilité du mode de propagation aux effets des contraintes, on calcule la différence entre le Lagrangien du régime initial sans contrainte et le Lagrangien du régime final avec perturbation induite par la contrainte. En supposant le champ dynamique perturbé homogène au champ initial sans perturbation, ce qui est une hypothèse classique de linéarisation autour d'un point de fonctionnement, on va négliger la perturbation induite par la contrainte sur le point de fonctionnement et donc supposer que seule la fréquence varie à l'ordre 1.

Le modèle de perturbation utilisé est décrit dans l'article de J. C Baumhauer, H. F Tiersten, J. Acoust. Soc. Am., vol 54, page 1017 et suivantes et son application aux ondes de volume détaillée dans l'article de B. K Sihna, H. F Tiersten, « First derivatives of the fundamental elastic constants of quartz », J. of Applied Physics, vol 50, n°4, page 2732 et suivantes, 1979.

Le Lagrangien du régime initial s'exprime par :

$$\iiint_{\Omega}(-\rho_0\omega_0^2 u_i^0 \delta u_i^* + \frac{\partial \delta u_i^*}{\partial a_j} C_{ijkl} \frac{\partial u_l^0}{\partial a_k})dV = \iiint_{\Omega} \delta u_i^* F_i^0 dV + \iint_{\Gamma} \delta u_i^* T_{ij}^0 n_j dS \qquad (8)$$

Le Lagrangien du régime final s'exprime par :

$$\iiint_{\Omega}(-\rho_0\omega^2 u_i \delta u_i^{0*} + \frac{\partial \delta u_i^{0*}}{\partial a_j} \overline{A}_{ijkl} \frac{\partial u_l}{\partial a_k})dV = \iiint_{\Omega} \delta u_i^{0*} F_i dV + \iint_{\Gamma} \delta u_i^{0*} T_{ij} n_j dS \qquad (9)$$

Dans les équations (8) et (9) $\rho_0$ représente la masse volumique à l'état initial non perturbé, $C_{i,j,k,l}$ les constantes élastiques en indices développés, définies par la relation de Hooke bien connue $T_{i,j} = C_{i,j,k,l}.S_{k,l}$ avec $T_{i,j}$ les contraintes et $S_{k,l}$ les déformations linéaires. $\Omega$ représente le volume d'intégration et V la variable d'intégration associée, r représente la surface délimitant le résonateur et S la variable d'intégration associée, $\delta u_i$ l'inconnue variationnelle ou travail virtuel et $\partial u_i/\partial a_j$ le gradient de déplacement dynamique, $F_i$ les forces de volume et $n_j$ la normale à la surface r. L'indice supérieur 0 dénote les champs et constantes non perturbés et l'exposant * dénote la conjugaison complexe. Le terme $\overline{A}_{ijkl}$ est le tenseur des contraintes élastiques perturbées telles que $\overline{A}_{ijkl} = C_{ijkl} + \overline{H}_{ijkl}$ où $\overline{H}_{ijkl}$ représente le tenseur des perturbations, la barre rendant compte de termes statiques induits par la perturbation.

La différence entre les équations (8) et (7) donne :

$$\frac{\omega-\omega_0}{\omega_0} = \frac{\Delta\omega}{\omega_0} = \frac{\iiint_{\Omega}(\frac{\partial u_i^{0*}}{\partial a_j} \overline{H}_{ijkl} \frac{\partial u_l^0}{\partial a_k})dV}{2\rho_0\omega_0^2 \iiint_{\Omega} u_m^{0*} u_m^0 dV} \qquad (10)$$

Le tenseur de perturbation est :

$$\overline{H}_{ijkl} = \delta_{ik}\overline{T}_{jl} + C_{ijkluv}\overline{S}_{uv} + C_{pjkl}\frac{\partial \overline{u}_i}{\partial a_p} + C_{ijql}\frac{\partial \overline{u}_k}{\partial a_q} + \frac{dC_{ijkl}}{d\theta}(\theta - \theta_0) \qquad (11)$$

où la barre rend compte de termes statiques induits par la perturbation, $\theta$ et $\theta_0$ représentent respectivement la température de fonctionnement et une température de référence, $\delta_{ik}$ est le tenseur de Kronecker, $C_{ijkluv}$ est le tenseur des constantes élastiques non linéaires, $\overline{T}_{ij}$, $\overline{S}_{uv}$ et $\frac{\partial \overline{u}_i}{\partial a_p}$ représentent respectivement les contraintes induites par la déformation, les déformations linéaires induites par la contrainte, et les gradients de déplacement statiques induits par la contrainte. Les coordonnées Lagrangiennes $a_i$ sont ici confondues avec les coordonnées eulériennes $x_i$.

Le calcul des coefficients de sensibilité aux contraintes se fait en supposant que la température de fonction-

nement $\theta$ est égale à la température de référence $\theta_0$. A partir des équations (7) et (10) pour une surface d'intégration unitaire, on en déduit l'expression (12) suivante traduisant la variation relative de fréquence:

$$\frac{\Delta\omega}{\omega_N}=\frac{\iiint_{\Omega}\left(\frac{\partial u_2^{0*}}{\partial x_2}\overline{H}_{2222}(x_1,x_2,x_3)\frac{\partial u_2^{0}}{\partial x_2}\right)dV}{2\rho_0\omega_N^2\iiint_{\Omega}u_2^{0*}u_2^{0}dV}=\frac{\int_{-\frac{1}{2}}^{+\frac{1}{2}}\int_{-\frac{1}{2}}^{+\frac{1}{2}}\int_{-e/2}^{+e/2}s_l^2\sin^2(\omega s_l x_2)\overline{H}_{2222}(x_1,x_2,x_3)dx_1dx_2dx_3}{2\rho_0\int_{-\frac{1}{2}}^{+\frac{1}{2}}\int_{-\frac{1}{2}}^{+\frac{1}{2}}\int_{-e/2}^{+e/2}\cos^2(\omega s_l x_2)dx_1dx_2dx_3} \quad (12)$$

Dans un régime de contraintes de faibles intensités, les déformations sont petites et le calcul de l'intégrale du numérateur de l'expression 12 se fait en simplifiant l'expression du tenseur de perturbation et en assimilant les gradients de déplacement aux déformations. On peut établir selon l'article « Stress sensitivity coefficients : a général approach for bulk, rayleigh and surface transverse waves" E. Bigler, S. Ballandras, Proc. Of IEEE IFCS, Honolulu (USA), juin 1996, que :

$$\overline{H}_{ijkl}=\left(\delta_{ik}\delta_{js}\delta_{lt}+C_{ijkluv}s_{uvst}+C_{pjkl}s_{ipkl}+C_{ijql}s_{kqst}\right)\overline{T}_{st}=K_{ijklst}\overline{T}_{st} \quad (13)$$

Avec $s_{ijkl}$ représentant les compliances, c'est-à-dire l'inverse au sens tensoriel des coefficients d'élasticité $C_{ijkl}$ et $S_{ij}= s_{ijkl}T_{kl}$.

Pour des contraintes constantes et homogènes dans le milieu où l'onde se propage, les termes statiques de l'intégrale (11) ont pour expression :

$$\frac{\Delta\omega}{\omega_N}=\frac{s_l^2}{2\rho_0}K_{2222st}\overline{T}_{st} = {}^s\alpha_{st}\ .\ \overline{T}_{st} \quad (14)$$

où ${}^s\alpha_{st}$ représente les coefficients de sensibilité aux contraintes de la fréquence.

Pour des supports isotropes, mais aussi pour des matériaux à forte symétrie tels que le silicium (100), on montre que les $K_{2222st}$ pour lesquels s=t sont nuls. Un calcul numérique montre que dans le cas du silicium monocristallin, $K_{222211}$= $K_{222233}$= -1, 45 et $K_{222222}$= -0, 86. Avec une lenteur du mode de compression de 1,184 $10^{-4}$ s/m, soit une vitesse de phase de 8441 m/s et une masse volumique de 2330 kg/m$^3$, on obtient des coefficients de sensibilité aux contraintes, pour le silicium, ${}^s\alpha_{11}$=-4,37.10$^{-12}$ Pa$^{-1}$ et ${}^s\alpha_{22}$=-2,6.10$^{-12}$ Pa$^{-1}$. Pour une contrainte de l'ordre du MPa, on obtient des variations de fréquences de quelques parties par million, soit de l'ordre de 1 à 3 kHz à 443 MHz et ce quel que soit l'ordre de l'harmonique considéré.

En revenant au cas d'une poutre encastrée en flexion, il est possible d'utiliser les travaux de S. Timoshenko et R. Goodier dans « Theory of elasticity », Mc Graw-Hill Edition, 3rd Edition, 1970, pour modéliser les effets statiques dans des formes de type poutre et de S. Ballandras, E. Bigler : « Surface acoustic wave devices with low sensitivity to mechanical and thermoelastic stresses », Journal of Applied Physics, vol. 72, n°88, pages 3272-3281, 1992.

Dans une poutre encastrée en flexion comme celle illustrée à la figure 2, le champ de contrainte dans la poutre s'exprime par :

$$\overline{T}_{11}=\frac{3F}{2e^3}x_1x_2 \quad \overline{T}_{12}=\frac{3F}{4e^3}\left(x_2^2-e^2\right) \quad \overline{T}_{22}=0 \quad (15)$$

Où F représente la force de sollicitation appliquée à l'extrémité libre de la poutre. En utilisant le seul premier terme car il n'y a pas de coefficient $\alpha_{12}$ dans le cas d'un cristal isotrope ou pour le silicium (100), on obtient une variation relative de pulsation ou de fréquence nulle comme l'indiquent les égalités (16):

$$\frac{\Delta\omega}{\omega_N}=\frac{s_l^2 K_{222211}\frac{3F}{2e^3}\int_{L-1}^{L+1}\int_{-e/2}^{+e/2}\sin^2(\omega s_l x_2)x_1 x_2 dx_1 dx_2}{2\rho_0\int_{L-1}^{L+1}dx_1}=\frac{Ls_l^2}{\rho_0}K_{222211}\frac{3F}{2e^3}\int_{-e/2}^{+e/2}\sin^2(\omega s_l x_2)x_2 dx_2=0 \tag{16}$$

L représente la longueur de la poutre.

La variation relative de la fréquence de résonance induite par l'application d'une contrainte est nulle, ce qui montre bien qu'une structure résonante acoustique de type HBAR formée d'un transducteur à film piézoélectrique solidaire d'un support en matériau isotrope comme le silicium ne peut servir de jauge de contrainte. Elle n'est pas sensible aux contraintes planaires.

Lorsque la contrainte est homogène dans l'épaisseur du support, une structure résonante HBAR classique peut servir de jauge de contrainte.

Si la poutre était réalisée en un matériau anisotrope, par exemple en quartz, la mesure serait possible, mais ne tirerait pas un aussi fort parti des termes de contraintes prédominants, soit $\overline{T}_{11}$.

## EXPOSÉ DE L'INVENTION

La présente invention a justement comme but de proposer une jauge de contrainte de type structure résonante acoustique qui a une bonne sensibilité à des forces planaires qui s'appliquent sur le support que le support soit dans un matériau isotrope ou non.

Pour y parvenir la présente invention propose d'introduire une dissymétrie dans le support destiné à être sollicité par les contraintes de manière à limiter en épaisseur la portion résonante à un seul signe de contrainte, compression ou extension.

Plus précisément, la présente invention est une jauge de contrainte de type structure résonante acoustique formée d'un transducteur piézoélectrique solidaire d'un support sur lequel s'applique la contrainte. Le support loge en regard du transducteur piézoélectrique, une partie réfléchissante enterrée pour réfléchir des ondes acoustiques de volume générées par le transducteur piézoélectrique lorsqu'il est excité sur un mode harmonique de la structure, et qui se propagent dans le support et entrent en résonance, cette partie réfléchissante étant placée à une distance du transducteur telle que l'intégrale de la contrainte sur la distance de propagation des ondes jusqu'à leur réflexion soit non nulle.

Le support comporte une fibre neutre médiane, la partie réfléchissante étant située, au plus profond, au niveau de la fibre neutre médiane du support.

La fibre neutre médiane est située à une profondeur par rapport à une face du support sur laquelle est le transducteur piézoélectrique, la partie réfléchissante peut être située à une profondeur d'environ 80% de la profondeur de la fibre neutre médiane.

Le support peut être réalisé à base de silicium, de langasite, de langanite, de langatate, de niobate de lithium, de saphir, de phosphate de gallium, de tantalate de lithium, de carbone diamant, de carbure de silicium, de verre, d'oxyde de silicium ou même d'un matériau métallique tel que l'acier inoxydable.

Le transducteur piézoélectrique peut être un transducteur à film piézoélectrique ou un transducteur piézoélectrique à ondes de volume conventionnel.

Le transducteur piézoélectrique peut être réalisé à base de nitrure d'aluminium, de quartz, de niobate de lithium, de tantalate de lithium, de niobate de potassium, d'oxyde de zinc, de langasite et ses dérivés, de phosphate de gallium, d'arséniure de gallium, de nitrure de gallium, de PZT, de PMN-PT, et de façon générale d'un matériau piézoélectrique.

La partie réfléchissante peut être une cavité, un miroir de Bragg ou un miroir réfléchissant les ondes acoustiques quelle que soit leur incidence.

On donne de préférence à la partie réfléchissante une taille et une forme sensiblement calquées sur celles du transducteur piézoélectrique.

La partie réfléchissante peut avoir une épaisseur sensiblement égale à environ dix pour cent de celle du support au niveau du transducteur piézoélectrique.

Le transducteur piézoélectrique peut être coiffé d'une couche d'adaptation d'impédance pour améliorer son couplage électromécanique.

La présente invention concerne également un capteur d'au moins un paramètre physique qui comporte au moins une jauge de contrainte ainsi caractérisée, les jauges de contrainte partageant le même support lorsque le capteur en comporte plusieurs.

Lorsque le capteur possède au moins deux jauges de contrainte, l'une peut être soumise à une contrainte en extension et l'autre à une contrainte en compression, ces deux jauges de contrainte étant destinées à être utilisées pour faire une mesure différentielle de manière à être compensée vis à vis de sources de perturbations corrélées telles qu'une variation de température par exemple.

Au moins une des jauges de contrainte dite de référence peut être située sur une zone du support soumise à sensiblement aucune contrainte.

Le support peut être une poutre, une membrane, un clou, une lame.

Lorsque le support est un clou, formé d'une tige surmontée par une tête dotée de points d'ancrage qui ont une position donnée par rapport à la tige au repos et qui gardent cette position lorsque la tige est sollicitée, une jauge de contrainte peut être placée sur la tête au voisinage de la tige ou des points d'ancrage.

Le support peut être une poutre encastrée à une extrémité et solidaire d'une masse sismique à l'autre extrémité.

Au moins une jauge de contrainte peut être reliée à une antenne.

Deux jauges de contraintes peuvent partager une même partie réfléchissante insérée entre deux transducteurs piézoélectriques.

Le capteur peut en outre comporter, solidaire du support, un capteur de température.

Le paramètre physique peut être une force, une pression, un couple, une accélération, un effet gyroscopique, et dans certains cas en plus une température.

La présente invention concerne également un procédé de fabrication d'une jauge de contrainte comprenant la mise en place d'au moins un transducteur piézoélectrique sur un support et la réalisation au sein du support d'au moins une partie réfléchissante en regard du transducteur piézoélectrique, pour réfléchir des ondes acoustiques de volume générées par le transducteur piézoélectrique lorsque le capteur est contraint, la partie réfléchissante étant enterrée dans le support de manière que l'intégrale de la contrainte sur la distance de propagation des ondes acoustiques de volume jusqu'à leur réflexion soit non nulle.

Le support peut être formé par l'assemblage d'un premier substrat à un second substrat, la partie réfléchissante étant réalisée sur ou dans le premier substrat avant l'assemblage, de manière qu'il soit à l'interface entre les deux substrats après assemblage, le second substrat portant le transducteur piézoélectrique.

Lorsque la partie réfléchissante est une cavité, elle peut être gravée dans le premier substrat.

L'assemblage peut être un collage avec de la colle, un collage anodique, un collage par thermo compression d'une couche ductile, un collage moléculaire, un collage par électroformage.

Le premier substrat peut être avantageusement un substrat silicium sur isolant avec une couche isolante prise en sandwich entre deux couches de silicium d'épaisseurs différentes.

Dans cette configuration, le support peut être délimité en partie par usinage de la couche de silicium la plus épaisse et arrêt sur la couche isolante, ce qui permet de maîtriser avec précision son épaisseur.

La partie réfléchissante peut être mise en place sur la couche de silicium la moins épaisse.

Lorsque le support est formé à partir d'un substrat silicium sur isolant avec une couche isolante prise en sandwich entre deux couches en silicium d'épaisseurs différentes, on réalise la partie réfléchissante au sein de la couche isolante supportée par la couche de silicium la plus épaisse et on réalise le transducteur piézoélectrique sur la couche de silicium la moins épaisse qui est rapportée sur la couche isolante.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

- la figure 1 montre une structure résonante hybride classique dont le support isotrope est une poutre encastrée, cet ensemble n'ayant pas une sensibilité suffisante pour servir de jauge de contrainte;
- la figure 2 montre un résonateur à ondes de volume conventionnel ;
- la figure 3 montre un premier exemple d'un jauge de contrainte selon l'invention ;
- la figure 4 montre sous forme de maillage une image de la déformée d'une poutre similaire à celle illustrée à la figure 3 ;
- la figure 5 illustre la distribution des contraintes au voisinage de la partie réfléchissante enterrée dans la poutre de la figure 4 ;
- la figure 6 montre un autre exemple de jauge de contrainte selon l'invention ;
- les figures 7A, 7B sont deux exemples de capteurs de pression selon l'invention, aptes à mesurer des pressions de manière différentielle ;
- les figures 8A, 8B montrent des variantes de capteurs selon l'invention aptes à mesurer des accélérations ;
- la figure 9A montre un exemple de jauge de contrainte selon l'invention dans lequel la partie réfléchissante est un miroir de Bragg et la figure 9B illustre une jauge de contrainte selon l'invention de type structure résonante acoustique comportant un transducteur piézoélectrique à ondes de volume conventionnel ;

les figures 10A, 10B, 10C sont des exemples de capteur de force selon l'invention dans lesquels le support est un clou ;

les figures 11A, 11B montrent la déformée du support de type clou soumis à une force normale à la tête et à une force radiale par rapport à la tête ;

les figures 11C et 11D montrent la distribution des contraintes dans la tête du clou de la figure 11A et 11B ;

la figure 12A montre le maillage du capteur de force à support de type clou au repos, avec ses jauges de contrainte au voisinage des points d'ancrage ;

les figures 12B, 12C montrent la distribution des contraintes dans la tête du clou de la figure 12A, soumise à une force normale à la tête, de signe positif et de signe négatif ;

les figures 12D, 12E montrent la distribution des contraintes dans la tête du clou de la figure 12A, soumise à une force radiale par rapport à la tête, de signe positif et de signe négatif ;

la figure 13A montre le maillage du capteur de force à support de type clou au repos, avec ses jauges de contrainte au voisinage de la tige ;

les figures 13B, 13C montrent la distribution des contraintes dans la tête du clou de la figure 13A, soumise à une force normale à la tête, de signe positif et de signe négatif ;

les figures 13D, 13E montrent la distribution des contraintes dans la tête du clou de la figure 13A, soumise à une force radiale par rapport à la tête, de signe positif et de signe négatif ;

la figure 14A montre la distribution des contraintes dans la tête du clou, d'épaisseur de 100 micromètres, soumise à une force radiale de 2 N ;

la figure 14B montre la distribution des contraintes dans la tête du clou, de dimensions doubles soumise à une force radiale de 1 N ;

la figure 15 montre l'influence d'un corps organique en face arrière d'un résonateur HBAR conventionnel ;

les figures 16A, 16B, 16C montrent des étapes d'un procédé de réalisation d'une jauge de contrainte selon l'invention ;

les figures 17A, 17B, 17C montrent deux capteurs de force à une jauge de contrainte selon l'invention associés pour la mesure d'un couple et deux exemples de capteurs de couple selon l'invention à plusieurs jauges de contrainte pour la mesure d'un couple.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

On va maintenant s'intéresser à la figure 3 qui montre une jauge de contrainte de type structure résonante acoustique selon l'invention. Elle est formée d'un transducteur piézoélectrique 10 à film mince solidaire d'un support 20. Dans l'exemple décrit le support 20 est une poutre encastrée à une extrémité 20.1 et ayant une autre extrémité 20.2 libre sur laquelle une force de sollicitation F s'applique. Cette force de sollicitation F dirigée selon l'axe x2 engendre des contraintes dans la poutre 20 et perturbe le transducteur piézoélectrique 10. L'axe x2 est dirigé vers le bas sur la figure 3. Le support 20 peut être réalisé dans un matériau cristallin ou amorphe. Ce matériau peut être isotrope ou non. Le matériau du support peut être réalisé à base de silicium, de langasite et ses dérivés langanite et langatate, de niobate de lithium, de saphir, de phosphate de gallium, de tantalate de lithium, de carbone diamant, de carbure de silicium, de verre, de oxyde de silicium ou même de métal tel que l'acier inoxydable.

De préférence, si le matériau employé pour le support 20 est cristallin, on choisit les orientations cristallographiques du matériau cristallin du support pour optimiser sa sensibilité aux contraintes mécaniques du mode de volume. On peut ainsi rechercher des coupes pour lesquelles tous les coefficients $K_{2222st}$ sont nuls à l'exception de l'un d'entre eux. Ainsi la jauge de contrainte ne sera sensible qu'à une seule direction de contrainte. On peut par exemple choisir $K_{222211} \neq 0$, $K_{222212} = 0$ et $K_{222222} = 0$.

Si le matériau du support n'est pas isotrope, le calcul de la sensibilité aux contraintes de la jauge de contrainte sera effectué avec le modèle simplifié exposé plus haut, mais en tenant compte des rotations tensorielles nécessaires à la simulation de la structure réelle.

Le transducteur piézoélectrique 10 peut être réalisé par exemple en nitrure d'aluminium ou en quartz ou encore en niobate de lithium, tantalate de lithium, niobate de potassium, oxyde de zinc, langasite et ses dérivés, phosphate de gallium, arséniure de gallium, nitrure de gallium, PZT, PMN-PT, etc.... Il est déposé ou reporté sur le support 20 de propagation.

Par un choix adéquat du matériau du support 20 et de celui du transducteur piézoélectrique 10 et des épaisseurs de ces deux pièces, il est possible que la jauge de contrainte à structure résonante acoustique présente des harmoniques compensées des effets des variation de température, la jauge de contrainte n'étant alors sensible qu'aux seuls effets de contraintes. Un choix avantageux est le silicium monocristallin pour le support 20 et le nitrure d'aluminium pour le transducteur piézoélectrique 10.

La poutre 20 a une longueur L et une épaisseur e. On définit dans la poutre 20 une cote 0 au niveau d'une fibre neutre médiane 30, une cote +e/2 au niveau d'une face principale avant portant le transducteur piézoélectrique 10 et une cote -e/2 au niveau d'une autre face principale dite arrière opposée à la face principale portant le transducteur piézoélectrique 10. On peut ainsi distinguer dans le support 20, deux régions 21, 22, situées de part et d'autre de la fibre neutre médiane 30. La première région 21 contrainte en extension se trouve entre la fibre neutre 30 et la face avant, la seconde région 22 contrainte en compression se trouve entre la fibre neutre 30 et la face arrière de la poutre 20. Des contraintes d'extension sont générées dans la première région 21 entre la cote 0 et la côte +e/2 et des contraintes de compression sont générées dans la seconde région 22 entre la cote 0 et la côte -e/2.

Dans l'exemple, le transducteur piézoélectrique 10 est un transducteur piézoélectrique à film mince, avec un film mince en matériau piézoélectrique 10.1 pris en sandwich entre deux électrodes 10.2, 10.3. En l'associant avec la poutre 20, on réalise ainsi une structure résonante HBAR. L'électrode 10.2 se trouve contre le support 20 et l'électrode 10.3 est en surface.

Lorsque le transducteur 10 est excité sur un mode harmonique de la structure, un champ électrique s'établit entre les électrodes 10.2, 10.3 et une onde acoustique prend naissance et se propage depuis le transducteur piézoélectrique 10 jusque dans le support 20 parallèlement au champ électrique, cette onde acoustique entre en résonance dans une portion 23 du support 20 située au droit du transducteur piézoélectrique 10. Lorsque la poutre est sollicitée par une force F, ses constantes élastiques sont affectées par les contraintes selon les lois décrites plus haut dans l'état de la technique antérieure. L'application d'une contrainte sur la poutre ne conditionne pas l'existence de l'onde excitée par le transducteur piézoélectrique mais elle modifie les propriétés de cette dernière, en particulier sa vitesse de phase et par voie de conséquence sa fréquence de résonance associée.

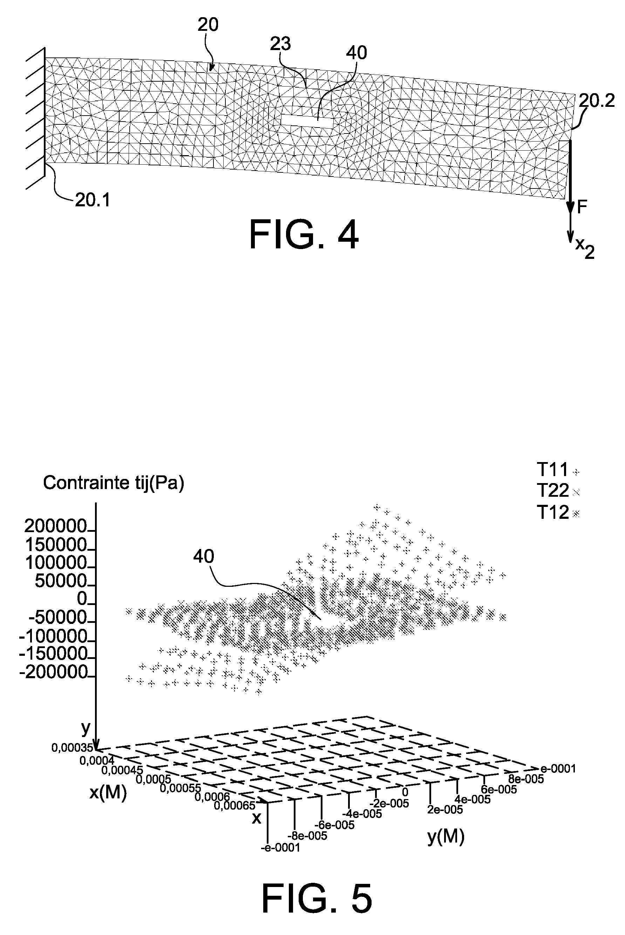

Selon l'invention, on place une partie réfléchissante 40 enterrée dans le support 20 au droit du transducteur piézoélectrique 10. Cette partie réfléchissante 40 est représentée comme une cavité sur la figure 4, cette cavité ayant une paroi inférieure qui réfléchit les ondes acoustiques se propageant dans le matériau du support 20. Elle borne la portion résonante 23. Sur la figure 4 le transducteur piézoélectrique n'est pas représenté. On suppose que sur la figure 3, la partie réfléchissante est un miroir réfléchissant les ondes quelles que soient leur incidence, ce miroir étant connu sous la dénomination de miroir à effet band-gap ou à effet de bande interdite complète.

La présence de la partie réfléchissante 40 incorporée au support 20 limite l'épaisseur de cette portion résonante 23. Cette limitation a pour but que la propagation des ondes acoustiques ne se fasse que dans une des deux régions 21, 22 soit la région en compression 22, soit la région en extension 21 mais pas les deux. On ôte la symétrie qui existait pour la propagation des ondes de volume d'une part dans la région en extension et d'autre part dans la région en compression. Dans l'exemple décrit, la portion résonante 23 est limitée à la région en extension 21. Si le transducteur piézoélectrique 10 était solidaire de l'autre face principale de la poutre 20, toutes choses étant égales par elles mêmes pour la force F, la portion résonante 23 serait contrainte en compression.

La jauge de contrainte peut servir de capteur de force pour mesurer la force F appliquée, puisque la variation relative de fréquence induite par l'application de la force n'est plus nulle. En effet dans l'équation (16), la contrainte est intégrée sur l'intervalle 0 à +e/2 (ou 0 à -e/2) et non plus sur l'intervalle -e/2 à +e/2 comme auparavant. La contrainte ne change pas de signe sur la distance parcourue par l'onde acoustique depuis sa naissance jusqu'à sa réflexion au niveau de la partie réfléchissante 40. Un tel capteur de force peut comporter une ou plusieurs jauges de contrainte.

Dans ce cas l'expression (16) devient :

$$\frac{\Delta\omega}{\omega_N} = \frac{Ls_l^2}{\rho_0} K_{222211} \frac{3F}{2e^3} \int_0^{+e} \sin^2(\omega s_l x_2) x_2 dx_2 = \frac{Ls_l^2}{\rho_0} K_{222211} \frac{3F}{8e} \qquad (17)$$

La variation relative de la fréquence $\Delta\omega/\omega_N$ dépend du sens d'application de la force F, ce qui permet de connaître le sens d'application de la force en plus de son module.

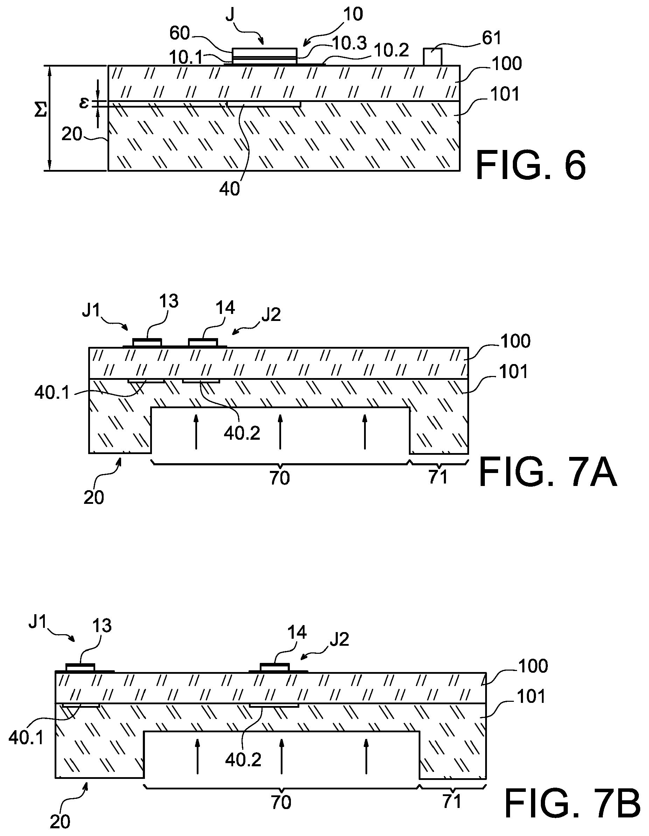

Sur les figures 3 et 4 décrites, on a placé la partie 40 réfléchissante au niveau de la fibre neutre 30, mais ce n'est pas une obligation. Cette position est la position la plus éloignée qu'elle peut prendre par rapport au transducteur piézoélectrique 10. Elle pourrait être rapprochée du transducteur piézoélectrique 10 (comme sur la figure 6) et la portion résonante 23 serait limitée en épaisseur à une fraction de l'épaisseur de l'une des régions 21, 22 contrainte en extension ou en compression. Ce qui compte, c'est que la contrainte dans la portion résonante 23 parcourue par l'onde acoustique conserve toujours le même signe. On pourrait ainsi rapprocher la partie réfléchissante 40 d'environ 20% par rapport au transducteur piézoélectrique 10.

La figure 4 est un maillage de la poutre de la figure 3 soumise à une force de $10^4$ Pa appliquée à son extrémité libre suivant l'axe x2. Ce maillage traduit la déformée de la poutre, on voit que cette déformée est homogène dans la portion résonante 23.

La figure 5 montre la distribution des contraintes notamment au voisinage de la partie réfléchissante 40. Au voisinage de la partie réfléchissante 40, le terme de contrainte prépondérant est $T_{11}$ et son signe est positif pour les y (correspondant à x2 dans le modèle précédent, voir les équations (1) à (17)) positifs et négatif pour les y négatifs.

On se réfère à la figure 6 qui permet de décrire un procédé de réalisation d'une jauge de contrainte selon l'invention. La figure 6 peut aussi illustrer un capteur d'au moins une grandeur physique selon l'invention à une seule jauge de contrainte. Grâce à la jauge de contrainte la grandeur physique mesurée peut être une force. La jauge de contrainte en elle-même n'est pas référencée. Elle possède un support 20, en forme de lame. Il comporte deux substrats 100, 101 assemblés l'un à l'autre et plus précisément un premier substrat par exemple en matériau cristallin 100 sur lequel est rapporté le transducteur piézoélectrique 10 et un second substrat par exemple en matériau cristallin 101 qui porte la partie réfléchissante 40. La partie réfléchissante 40 se trouve à l'interface entre le premier substrat 100 et le second substrat 101 après l'assemblage. La partie réfléchissante 40 est une cuvette gravée dans le premier substrat 100. L'assemblage entre les deux substrats 100, 101 peut se faire par collage avec de la colle époxy par exemple, par collage anodique, par thermo compression d'une couche ductile, par exemple en or, insérée entre les deux substrats 100, 101, par collage moléculaire, ou par tout moyen d'assemblage connu dans le domaine de la microélectronique. En variante, on peut faire croître par électroformage le substrat inférieur sur le substrat supérieur.

Il est possible que la jauge de contrainte J objet de l'invention comporte de plus, une couche de couverture 60 du transducteur piézoélectrique 10. Cette couche 60 coiffe le transducteur piézoélectrique 10, elle recouvre l'électrode 10.3 du transducteur piézoélectrique 10 opposée à celle 10.2 qui se trouve du côté du support 20. Cette couche de couverture 60, d'épaisseur appropriée, sert d'adaptation d'impédance de manière à améliorer le couplage électromécanique entre le transducteur piézoélectrique 10 et le support 20, et à limiter les pertes d'insertion. La couche de couverture 60 peut être réalisée dans un matériau de la liste des matériaux possibles pour le support 20. De préference, on peut la réaliser dans le matériau constituant le transducteur piézoélectrique 10. On peut se référer à la demande de brevet FR-A-2 889 375 qui divulgue une structure résonante acoustique hybride avec cette couche d'adaptation d'impédance.

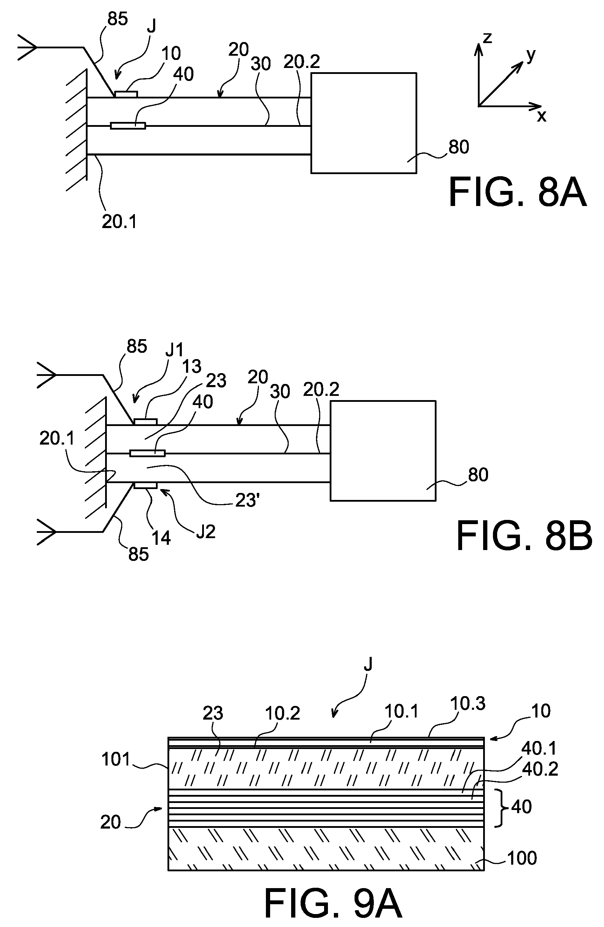

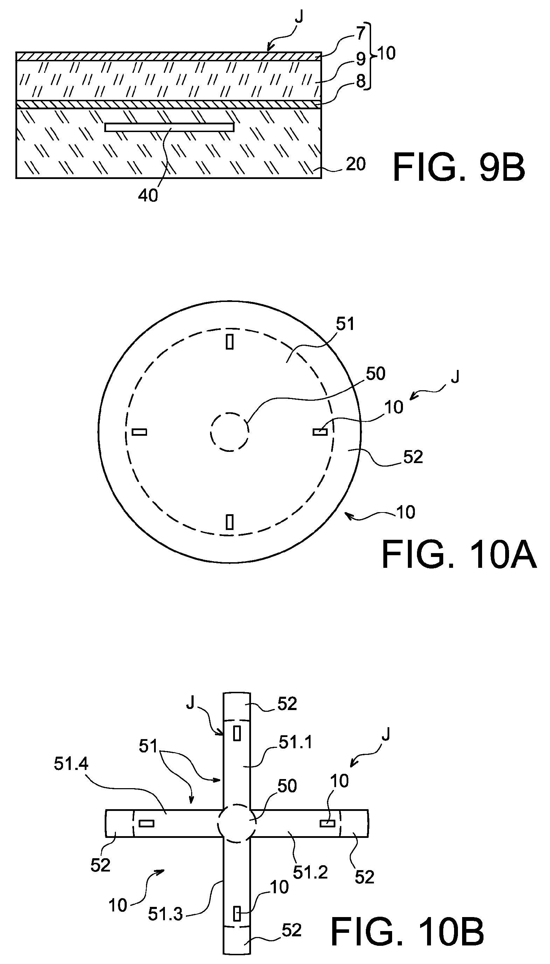

La partie réfléchissante 40 sera située en vis-à-vis du transducteur piézoélectrique 10. Sa surface sera de préférence sensiblement égale à celle de l'emprise du transducteur piézoélectrique 10 sur le support 20, et homothétique de rapport 1 avec elle. Il est bien sûr possible que sa surface soit plus grande que l'emprise du transducteur piézoélectrique 10 comme illustré sur la figure 8A. On peut toutefois imaginer qu'elle soit plus petite comme illustré sur la figure 9B.

La partie réfléchissante 40 aura une épaisseur $\varepsilon$ suffisante pour que l'onde acoustique qui prend naissance dans le transducteur piézoélectrique 10 soit bien réfléchie afin qu'elle ne se propage pas dans la matière du support 20 sous-jacente, c'est-à-dire dans le second substrat 101. Son épaisseur $\varepsilon$ devra être telle que l'onde acoustique ne se propage que dans une seule des régions contraintes en extension ou bien en compression et qu'elle ne pénètre pas dans l'autre. Le premier substrat 100 peut correspondre à la région contrainte en extension et le second substrat 101 correspondre à la région contrainte en compression.

Sur la figure 6, les deux substrats 100, 101 n'ont pas la même épaisseur pour que le fond de la cuvette formant la partie réfléchissante 40 soit localisé dans l'une des zones contraintes. La partie réfléchissante aurait pu être localisée au niveau de la fibre neutre sans empiéter dans l'autre zone contrainte. L'épaisseur $\varepsilon$ de la partie réfléchissante 40 sera inférieure à la demi-épaisseur $\Sigma/2$ du support 20 mais préférentiellement inférieure à environ 10% de l'épaisseur $\Sigma$ du support 20. Plus l'épaisseur $\varepsilon$ de la partie réfléchissante 40 est faible plus le support 20 se comportera de manière homogène, ce qui est recherché.

Dans la configuration de la figure 6, le second substrat 101 peut servir de protection mécanique à la jauge de contrainte, ce qui permet son intégration dans des systèmes au contact direct de l'environnement extérieur comme dans des capteurs de pression par exemple.

On a muni le capteur de la figure 6 d'un autre capteur 61 qui peut être un capteur de température. Le capteur de la figure 6 peut alors mesurer plusieurs grandeurs physiques, dans le cas présent une température en plus d'une force.

Le capteur selon l'invention peut être rapporté de façon rigide sur l'objet siège des contraintes à mesurer, de manière que son support soit soumis aux contraintes, sans nuire à la bonne opération du transducteur piézoélectrique de la jauge de contrainte.

On a vu sur la figure 3, que le support 20 pouvait prendre la forme d'une poutre. D'autres formes sont possibles comme une membrane.

Il est également possible de réaliser un capteur d'une ou plusieurs grandeurs physiques en regroupant plusieurs jauges de contraintes sur un même support.

On se réfère aux figures 7A et 7B qui montrent deux modes de réalisation d'un capteur de pression. Sur ces figures, le support est une membrane 20 qui comporte une partie centrale 70 entourée par un bord 71. Le bord 71 a une épaisseur plus importante que la partie centrale 70. Une pression hydrostatique sensiblement homogène s'applique sur la partie centrale 70 de la membrane 20. Deux jauges de contraintes J1, J2 sont représentées. Leurs transducteurs piézoélectriques sont référencés 13 et 14, ils coopèrent avec la membrane. Ils sont placés sur la membrane 20 sur une face opposée à celle recevant la pression.

Sur la figure 7A, l'une des jauges de contrainte J2 se trouve au niveau de la zone centrale 70 et l'autre J1 empiète sur la zone centrale 70 et sur le bord 71. En fait les deux jauges de contrainte J1, J2 sont placées à des endroits de la membrane où les contraintes sont de types différents. Dans la membrane 20 les contraintes sont radiales, c'est-à-dire sensiblement parallèles à sa surface portant les transducteurs piézoélectriques 13, 14. La jauge de contrainte J2 la plus centrale est soumise à des contraintes radiales d'extension et la jauge de contrainte J1 la plus externe est soumise à des contraintes radiales de compression à cause de l'épaisseur du bord 71 plus grande que celle de la partie centrale 70. Avec ces deux jauges de contrainte J1, J2 et donc avec deux structures résonantes soit deux transducteurs piézoélectriques 13, 14, le capteur peut servir à faire des mesures différentielles de pression.

En regard de chacun des transducteurs piézoélectriques 13, 14, se trouve, au sein de la membrane 20 une partie réfléchissante 40.1, 40.2 pour les ondes acoustiques émises lorsque le transducteur piézoélectrique associé 13, 14 est excité sur un mode harmonique de la structure.

La fréquence de résonance de chacun des transducteurs piézoélectriques est donnée en première approximation par la relation (14). Dans ce cas, les fréquences de résonance des deux transducteurs piézoélectriques 13, 14 vont évoluer dans deux directions opposées. Le signe des contraintes appliquées à chaque jauge de contrainte J1, J2 étant opposé et en supposant que leur module soit le même, la différences des fréquences de résonance est alors représentative des effets dus à la pression seule et on peut s'affranchir de sources de perturbations corrélées comme la variation de la fréquence due à la température dans la mesure où les deux transducteurs piézoélectriques 13, 14 possèdent sensiblement le même coefficient de variation de la fréquence en fonction de la température. La sensibilité de la mesure de la fréquence est alors deux fois plus grande qu'avec une unique jauge de contrainte.

Ici encore la membrane 20 peut être réalisée par l'assemblage de deux substrats 100, 101 dont l'un référencé 100, moins épais en son centre qu'à son bord comporte les parties réfléchissantes 40.1, 40.2 et dont l'autre référencé 101, d'épaisseur sensiblement constante, porte les transducteurs piézoélectriques 13, 14.

En variante, comme illustré sur la figure 7B, il est possible que l'une des jauges de contrainte J1 soit située dans une zone de la membrane 20 insensible aux effets de la pression qu'elle reçoit. Cette zone se trouve sur le bord de la membrane 20. La jauge de contrainte J1 placée sur le bord est qualifiée de jauge de contrainte de référence. L'autre jauge de contrainte J2 est située sensiblement dans la zone centrale de la membrane 20, où la contrainte est une extension. Les parties réfléchissantes 40.1', 40.2' sont en vis-à-vis des transducteurs piézoélectriques 13', 14' respectifs comme décrit précédemment.

Le choix de la structure avec jauge de contrainte de référence ou avec deux jauges de contrainte placées dans des zones soumises à des contraintes de type différent dépend du cahier des charges auquel le capteur doit répondre.

Il est également possible d'utiliser le capteur de l'invention comme accéléromètre. Les figures 8A, 8B montrent de tels modes de réalisation d'accéléromètres.

Dans ce cas le support 20 est une poutre encastrée à une extrémité 20.1 et dont l'autre extrémité 20.2 est libre et solidaire d'une masse sismique 80. La masse sismique 80 est un corps massif chargé de réagir aux variations d'accélération. On considère que la fibre neutre 30 de la poutre est incluse dans le plan xoy, en l'absence d'accélération. Si l'accéléromètre subit une accélération (selon Oz) la masse sismique 80 en raison de son inertie s'abaisse et la poutre 20 subit une flexion. En cas de freinage c'est le phénomène inverse qui se produit. Pour mesurer l'accélération ou le freinage, il suffit donc d'identifier la position relative de la masse sismique 80 par rapport au plan xoy. On place sur la poutre 20 au moins une jauge de contrainte J, elle est plus près de l'encastrement que de la masse sismique 80. On cherche que sa position soit dans une zone de contrainte maximale de la poutre 20. Elle va mesurer les contraintes induites dans la poutre 20 au voisinage de l'encastrement, ce qui permet de remonter aux variations d'accélération subies par la jauge de contrainte de type structure résonante. Dans l'exemple représenté sur la figure 8A, si le capteur subit une accélération, la jauge de contrainte J est placée dans une région de la poutre 20 contrainte en extension. On a placé dans la poutre 20 au droit du transducteur piézoélectrique 10 une partie réfléchissante 40.

La jauge de contrainte J peut être reliée à une antenne radiofréquence 85, au niveau de son transducteur piézoélectrique 10, ce dernier étant interrogé à distance sur les variations de fréquence qu'il mesure. Le capteur fonctionne alors comme transpondeur.

Il est possible de placer plusieurs jauges de contrainte J1, J2 sur la poutre 20 de manière à obtenir un accéléromètre différentiel peu sensible à des perturbations indésirables comme les variations de température. Dans cette configuration, les deux transducteurs piézoélectriques 13, 14 des deux jauges de contrainte sont placés sur les deux faces principales opposées de la poutre 20 et de part et d'autre de la partie réfléchissante 40. La partie réfléchissante 40 se trouve au niveau de la fibre médiane neutre 30 de la poutre 20. Les deux transducteurs 13, 14 sont alignés avec la partie réfléchissante 40. Les deux transducteurs piézoélectriques 13, 14 coopèrent avec une même partie réfléchissante 40, car ils sont placés en vis-à-vis l'un avec l'autre. Les deux jauges de contrainte J1, J2 partagent la même partie réfléchissante 40, elles sont placées dos à dos.

Dans la configuration de la figure 8B, le fléchissement de la poutre 20 dans une direction donnée entraîne l'apparition de contraintes de signes opposés dans les deux portions résonantes 23, 23' qui encadrent la partie réfléchissante 40. Les deux jauges de contrainte J1, J2 sont soumises à des contraintes égales et opposées et conformément à la formule (17), les variations de fréquence mesurées par les transducteurs piézoélectriques 13, 14 seront égales et opposées. Dans cette variante également les deux transducteurs piézoélectriques 13, 14 sont reliés à une antenne 85. Sur la figure, on a représenté deux antennes distinctes mais une seule aurait pu suffire.

On peut envisager que la jauge de contrainte selon l'invention soit conçue de manière à minimiser l'influence de la température à laquelle elle est soumise.

On choisira les matériaux et les épaisseurs d'une part du transducteur piézoélectrique 10 et du support 20 d'autre part, de manière à tirer partie de leurs propriétés thermo élastiques contra variantes, par exemple en employant du nitrure d'aluminium comme matériau piézoélectrique et du silicium pour le support. On rend sensiblement nul le coefficient de sensibilité thermique de la jauge de contrainte selon l'invention et du capteur qui utilise une telle jauge.

Au lieu que la partie réfléchissante 40 soit réalisée par une cavité logée au sein du support 20, il est possible qu'elle soit réalisée par un miroir de Bragg logé au sein du support 20. On peut se référer à la figure 9A. Le miroir de Bragg 40 est enterré dans le support 20 et se trouve, dans l'exemple décrit, sensiblement à une profondeur médiane par rapport à l'épaisseur totale du support 20. Le transducteur piézoélectrique 10 est similaire à ceux montrés précédemment, à film piézoélectrique mince. Le miroir de Bragg 40 comporte classiquement un empilement de couches alternées 40.1, 40.2 ayant des indices de réflexion différents. L'épaisseur des couches 40.1, 40.2 est un multiple impair du quart de la longueur d'onde de l'onde acoustique qui se propage dans la portion résonante 23. Les réflexions successives sur les diverses couches 40.1, 40.2 créent l'effet miroir. On peut ainsi utiliser une alternance de couches d'oxyde de silicium et de nitrure de silicium. Le support 20 est alors formé du miroir de Bragg 40 pris en sandwich entre deux substrats 100, 101.

En variante illustrée sur la figure 9B, la jauge de contrainte peut comporter un transducteur piézoélectrique 10 classique formé d'un bloc en matériau piézoélectrique 9, et plus d'un film. Ce bloc 9 étant pris en sandwich entre deux électrodes 7, 8. Ce transducteur piézoélectrique 10 est solidaire, au niveau de l'une de ses électrodes 8 d'un support 20 pourvu de la partie réfléchissante 40 enterrée. La profondeur de la partie réfléchissante 40 est choisie pour que l'intégrale de la contrainte dans la structure résonante ainsi formée soit non nulle sur la distance de propagation de l'onde.

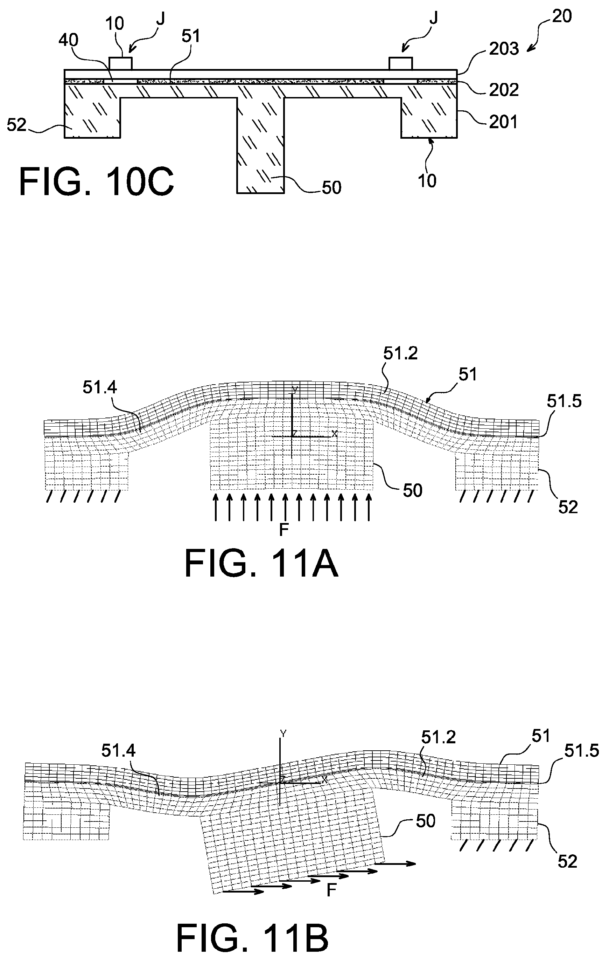

On va maintenant s'intéresser à un capteur d'au moins une grandeur physique selon l'invention dont le support 20 permet de mesurer un champ de contraintes complexes. Dans cet exemple le capteur est un capteur de force. On se réfère aux figures 10A, 10B, 10C qui montrent deux variantes de capteur dont le support prend la forme d'un clou. Le clou comporte une tige 50 destinée à être sollicitée par une force F et qui est solidaire d'une tête 51 destinée à être déformée ou contrainte lorsque la tige 50 est sollicitée. La tête 51 comporte des points d'ancrage 52 qui ont une position donnée par rapport à la tige 50 au repos et qui gardent cette position lorsque la tige 50 est sollicitée.

On peut se reporter à la demande de brevet français EP-A-1 275 949 qui décrit ce type de support. La tête 51 peut prendre la forme d'une membrane, solidaire dans sa partie centrale de la tige 51 et dont les points d'ancrage 52 sont sur sa périphérie comme illustré sur la figure 10A. En variante, elle peut être formée de bras 51.1, 51.2, 51.3, 51.4 reliés entre eux à une extrémité et solidaires de la tige 50 au niveau de cette extrémité comme illustré sur la figure 10B. Les points d'ancrage 52 se trouvent alors à l'autre extrémité des bras 51.1, 51.2, 51.3, 51.4. Les points d'ancrage 52 peuvent être discrets comme sur la figure 10A ou continus comme sur la figure 10B.

La figure 10C est une vue en coupe qui peut correspondre à l'une ou l'autre des variantes.

On répartit sur la tête 51 plusieurs jauges de contrainte J. Si la tête 51 comporte des bras, on peut placer une jauge de contrainte sur chacun des bras 51.1, 51.2, 51.3, 51.4. Si la tête est une membrane, on peut répartir de façon sensiblement régulière plusieurs jauges de contraintes J. Les transducteurs piézoélectriques 10 qui composent les jauges de contraintes J sont placés à sa surface. On dispose également, selon l'invention une partie réfléchissante 40 au droit de chacun des transducteurs piézoélectriques 10, enterrée dans le matériau de la tête 51.

On place les transducteurs piézoélectriques 10 et les parties réfléchissantes 40 de manière que les jauges de contrainte ainsi formées soient localisées en des points de grande sensibilité aux contraintes, c'est-à-dire en des points soumis à la contrainte longitudinale la plus intense. On a représenté sur les figures 11A, 11B le maillage par éléments finis du support 10 de type clou classique traduisant les déformations qui s'appliquent en son sein lorsqu'une force est appliquée sur la tige 50 au niveau du talon du clou. La force a une valeur de 2 N, ce qui correspond à une pression de 2 KPa sur le talon du clou. On suppose que la tête 51 du clou comporte des bras 51.1 à 51.4 comme sur la figure 10B et que les points d'ancrage 52 sont au niveau de l'extrémité des bras à l'opposé de la tige 51. La tige 50 a un axe principal dirigé selon l'axe y. Le support 10 ne comporte pas de partie réfléchissante. Sur la figure 11A, les forces sont appliquées selon l'axe y, elles sont dirigées selon l'axe principal de la tige 50. Sur la figure 11B, les forces sont sensiblement normales à l'axe principal de la tige 50. Chacun des bras 51.1 à 51.4 se comporte comme une poutre encastrée à ses deux extrémités à cause de la fixation à la tige 50 et des points d'ancrage 52. Dans le cas d'une membrane, les points d'ancrage peuvent prendre la forme d'une couronne.

Sur ces figures, on s'aperçoit que les zones les plus contraintes sont celles situées à proximité des encastrements.

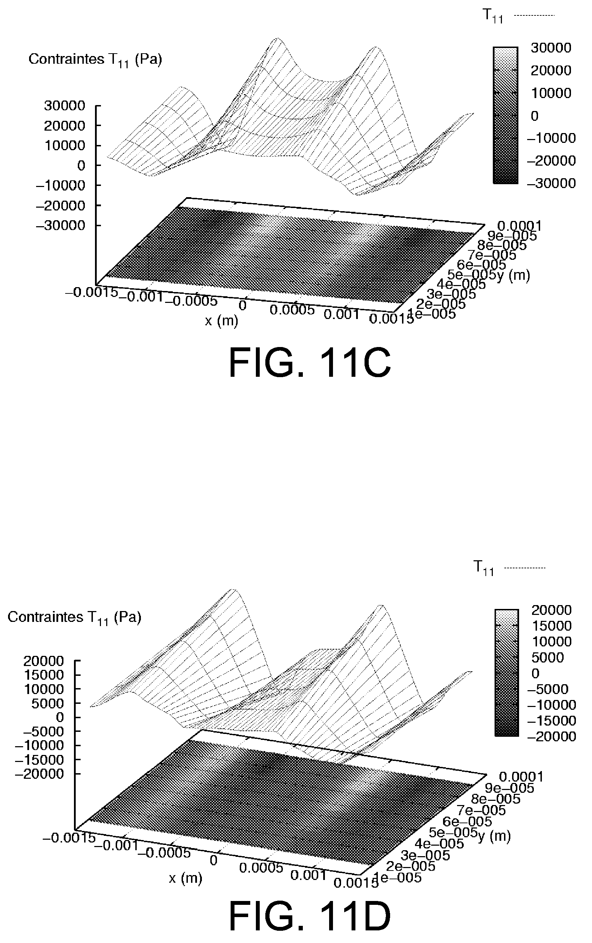

Les figures 11C et 11D représentent les contraintes induites par l'application des forces dans la couche supérieure 51.5 de la tête 51 du clou. Cette couche supérieure 51.5 est illustrée en sombre sur les figures 11A, 11B. La contrainte $T_{11}$ est prépondérante et les contraintes $T_{12}$ et $T_{22}$ peuvent être négligées. Les transducteurs piézoélectriques 10 et les parties réfléchissantes 40, c'est-à-dire les jauges de contrainte J peuvent être placées au voisinage des encastrements: c'est-à-dire soit près de la tige 50, soit vers la périphérie à proximité des points d'ancrage 52.

Plus précisément, les transducteurs piézoélectriques 10 qui sont du côté de la tige 50 sont situés partiellement au droit de la tige 50 et ceux qui sont du côté d'un point d'ancrage 52 sont situés partiellement au droit d'un point d'ancrage 52. Il en est de même pour les parties réfléchissantes 40 puisqu'elles sont calées en regard des transducteurs piézoélectriques 10.

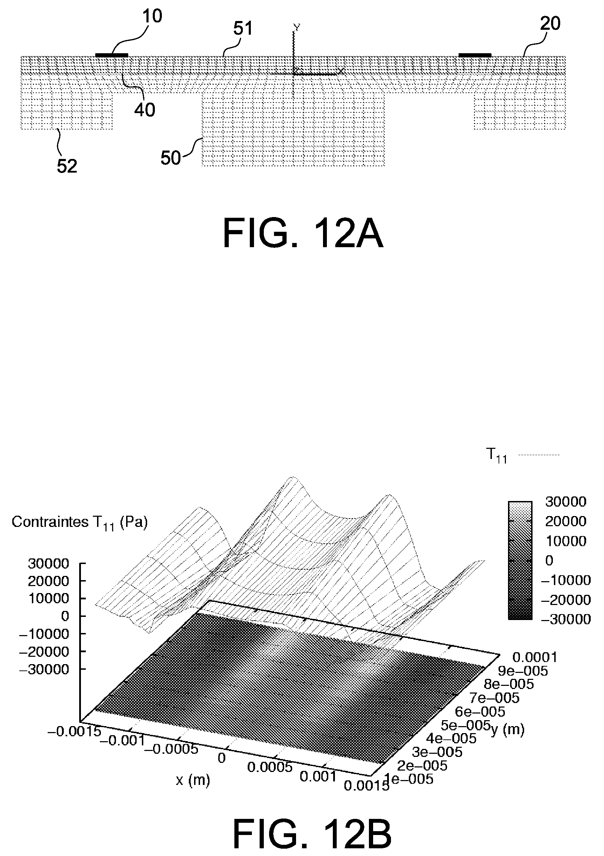

La figure 12A montre une configuration du capteur de force selon l'invention dans laquelle les jauges de contrainte J, c'est-à-dire les transducteurs piézoélectriques 10 et les parties réfléchissantes 40 enterrées dans la tête, sont situées à proximité des points d'encastrement 52, elles les surplombent partiellement.

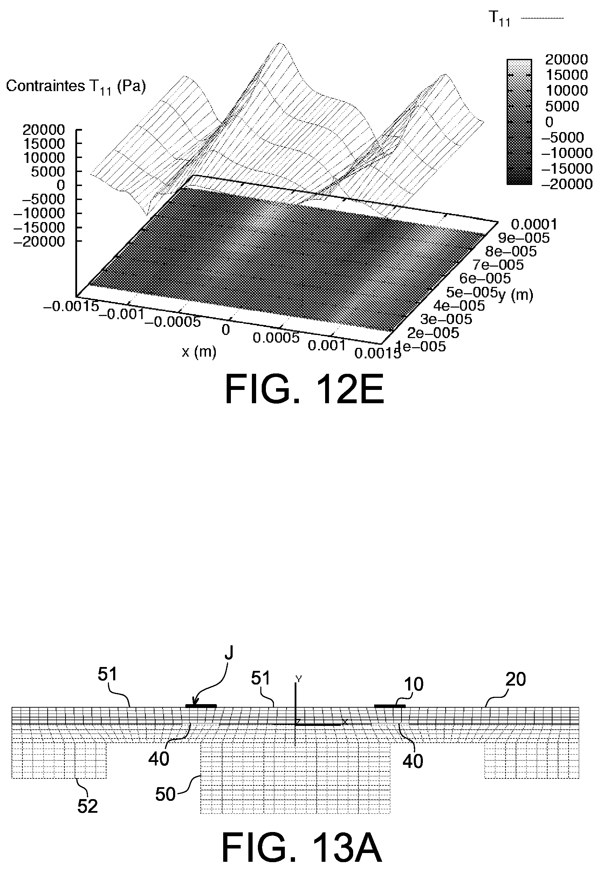

La figure 13A montre une configuration du capteur de force selon l'invention dans laquelle les jauges de contrainte J, c'est-à-dire les transducteurs piézoélectriques 10 et les parties réfléchissantes 40 enterrées dans la tête 51, sont situées à proximité de la tige 50, elles la surplombent partiellement. On montre par calcul que les contraintes sont maximales en ces points.

Il est bien sûr possible de placer une ou plusieurs jauges de contrainte J à proximité de la tige 50 et une ou plusieurs à proximité de points d'ancrage 52.

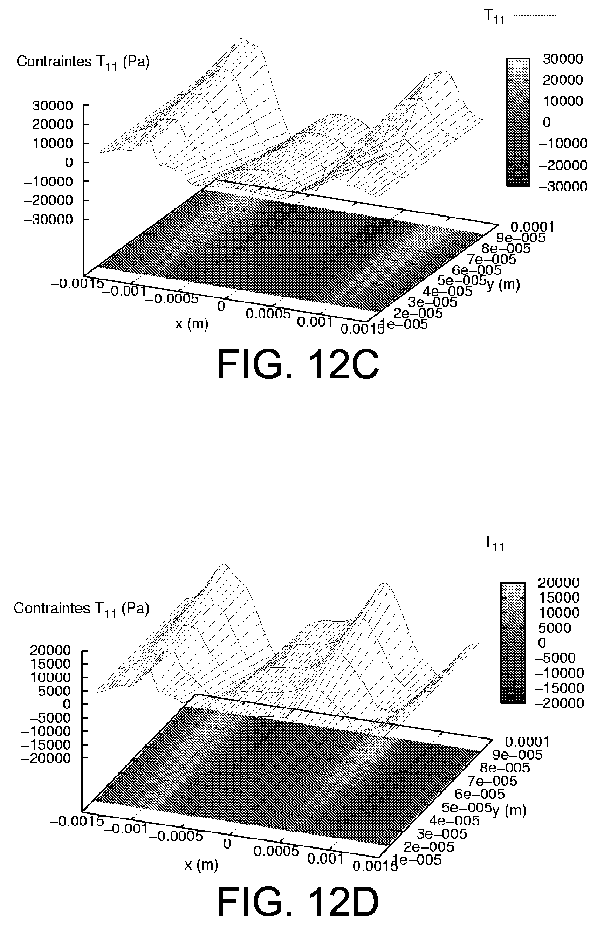

Les figures 12B, 12C, 12D, 12E représentent respectivement la contrainte $T_{11}$ prenant naissance dans la tête 51 pour une force dirigée selon +y (correspondant à x2 dans le modèle précédent, voir les équations (1) à (17)), -y, +x (correspondant à x1 dans le modèle précédent, voir les équations (1) à (17)) et -x dans la configuration de la figure 12A, avec les jauges de contraintes du côté points d'ancrage.

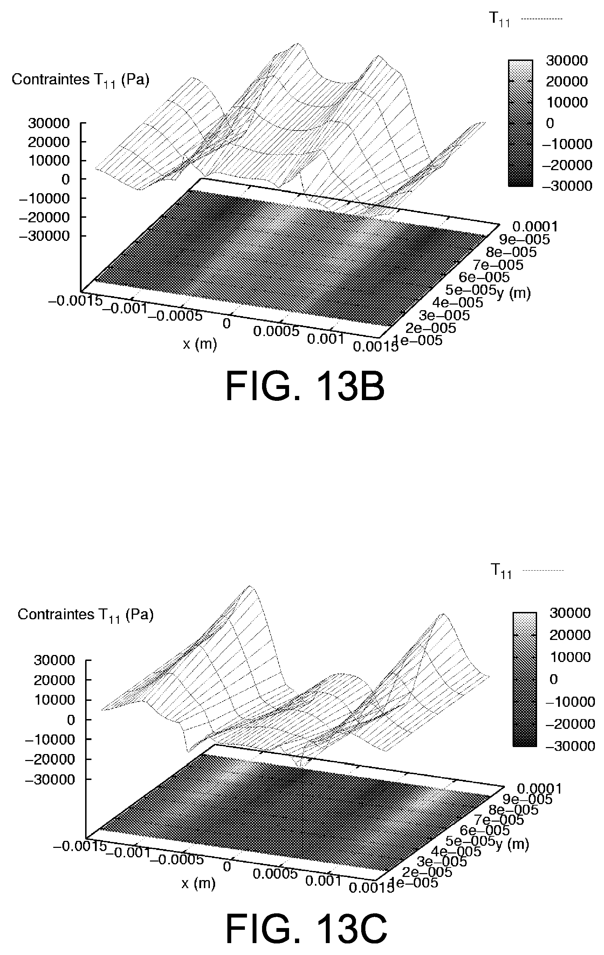

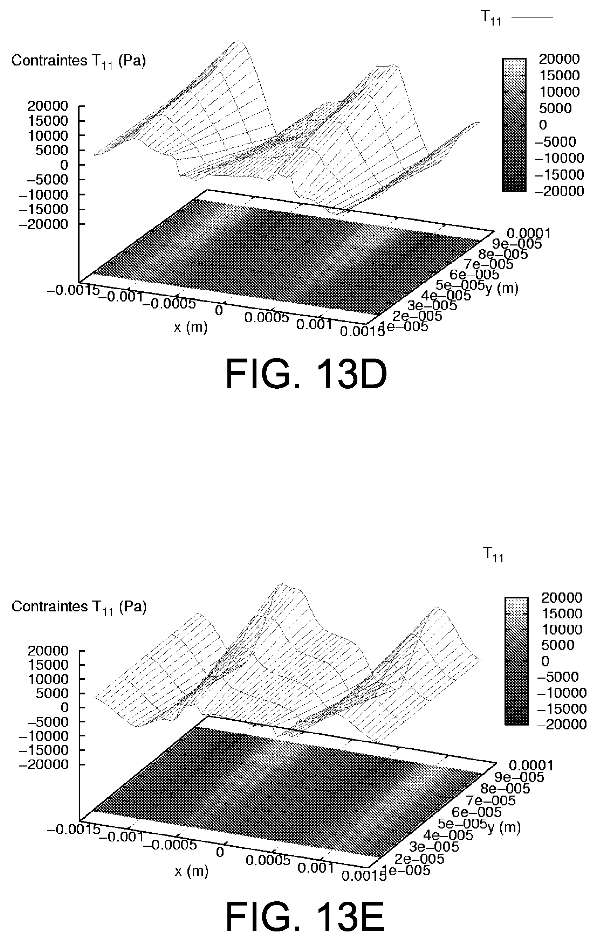

Les figures 13B, 13C, 13D, 13E représentent respectivement la contrainte $T_{11}$ prenant naissance dans la tête pour une force dirigée selon +y, -y, +x et -x dans la configuration de la figure 13A, avec les jauges de contrainte du côté tige.

Avec deux jauges de contrainte utiles et une jauge de contrainte de référence placée dans une zone insensible aux contraintes, on peut bien déterminer la nature et l'orientation des forces qui s'appliquent sur le support. Le changement de signe se répercute bien et sans ambiguïté pour une force radiale selon x.

Les résultats montrent qu'il n'y a pas de différence particulière entre les deux positions près de la tige ou près des points d'ancrage. Ainsi c'est la difficulté technologique ou le choix d'une stratégie de détection spécifique qui présidera à la localisation des transducteurs.

Pour détecter les trois termes de contrainte recherchées $\sigma_{zz}$ $\tau_{zx}$ $\tau_{zy}$ (correspondant à $T_{22}$, $T_{21}$ et $T_{23}$ dans le modèle précédent, voir les équations (1) à (17)), on pourra utiliser au moins quatre jauges de contrainte et même cinq. Un tel nombre de jauges de contrainte peut se révéler critique pour une application en transpondeur à la fréquence centrale de 433,92 MHz compte tenue de l'étroitesse de la bande utile allouée autour de cette fréquence qui est de 1,74 MHz. Cela sera plus réaliste à la fréquence centrale de 2,44 GHz puisque la bande utile allouée s'étend sur 83,5 MHz, il sera plus facile de loger les fréquences des différents transducteurs piézoélectriques dans cette bande utile.

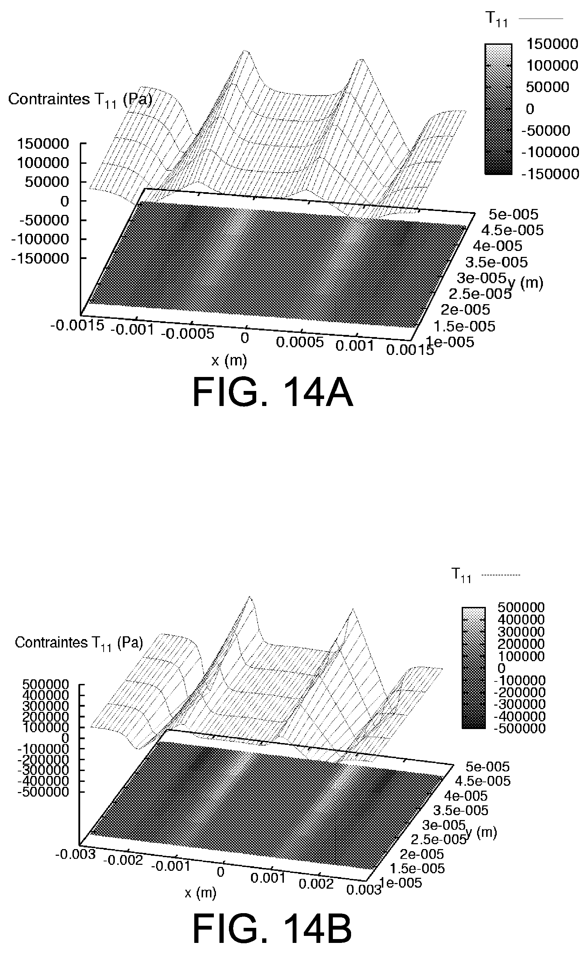

Les calculs montrent qu'avec une tête en silicium monocristallin dont l'épaisseur est de 100 micromètres et une force selon x de 1 N appliquée sur le talon du clou, on peut escompter obtenir une contrainte moyenne de 7,5 KPa dans le matériau de la portion résonante entre le transducteur piézoélectrique et la partie réfléchissante. Cette distance correspond au parcours de l'onde acoustique. On précise que la partie réfléchissante est enterrée à mi-épaisseur de la tête. En tenant compte des valeurs de sensibilité aux contrainte du silicium on obtient une variation relative de fréquence de $-3{,}3.10^{-8}$. Pour augmenter la sensibilité du capteur de force, on peut réduire l'épaisseur de la tête à 100 micromètres en laissant la partie réfléchissante enterrée à mi épaisseur. On obtient une distribution de la contrainte $T_{11}$ comme illustré sur la figure 14A. Avec une telle épaisseur la contrainte moyenne est de 37,5 kPa soit cinq fois plus que précédemment. On atteint une variation relative de fréquence de $-1{,}65.10^{-7}$. En multipliant les dimensions d'un facteur deux, c'est-à-dire la surface de la tête, on gagne un facteur huit sur la contrainte moyenne et on obtient une variation relative de fréquence de$1{,}3.10^{-6}$.

On peut se référer à la figure 14B qui illustre la distribution des contraintes dans la tête dans ce dernier cas.

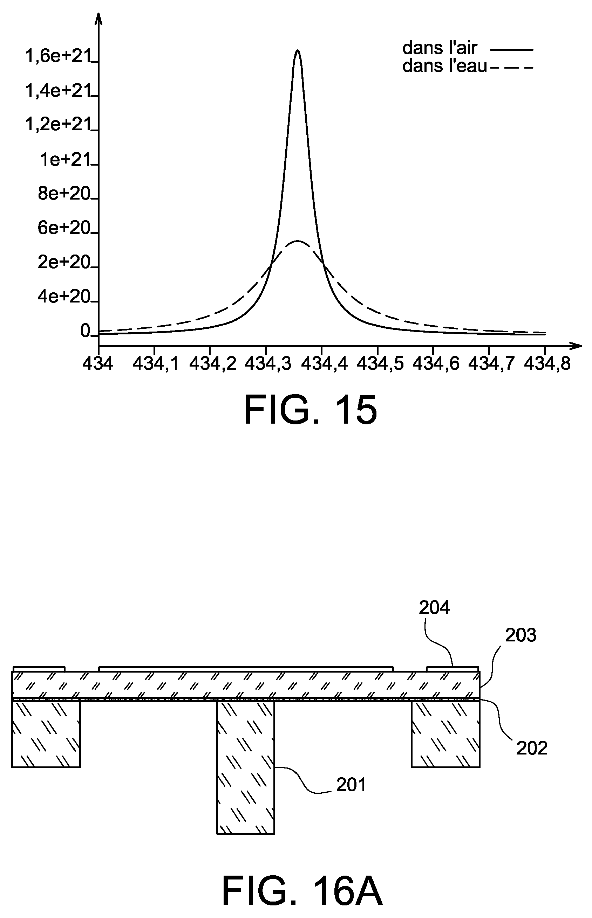

Le fait de placer la partie réfléchissante 40 enterrée dans le support 20 a pour avantage d'augmenter la sensibilité de la mesure de la contrainte et de protéger le capteur de force ainsi créé vis-à-vis de toute matière organique dont l'effet serait d'absorber l'énergie acoustique. Sur la figure 15, on a illustré les variations de la conductance pour des charges acoustiques en face arrière d'un résonateur correspondant à l'air et à l'eau en fonction de la fréquence. Les pics, traduisant l'absorption maximale de l'onde acoustique, sont situés aux alentours de 434,35 MHz.

On va maintenant décrire un procédé de réalisation d'un capteur d'au moins un paramètre physique selon l'invention dont le support est de type clou.

La réalisation de la partie réfléchissante est un facteur critique pour le fonctionnement du capteur dont le support est de type clou car il faut bien maîtriser l'épaisseur de la tête entre la tige 51 et les points d'ancrage 52 pour obtenir une sensibilité voulue.

On peut employer un substrat SOI (substrat silicium sur isolant) avec une couche de silicium épaisse référencée 201, une couche de silicium moins épaisse référencée 203 et une couche isolante électriquement entre les deux couches de silicium référencée 202. On se réfère à la figure 10C.

Lors de la réalisation du support, on réalise la partie réfléchissante 40 par gravure au niveau de la couche isolante 202. La tige 50 et les points d'ancrage 52 sont usinés dans la couche en silicium la plus épaisse 201 sur laquelle est formée la couche isolante 202.

On réalise les transducteurs piézoélectriques 10 sur la couche de silicium la moins épaisse 203 qui surmonte sur la couche isolante 202 et qui est rapportée sur la couche de silicium plus épaisse 201.

L'ajustement de l'épaisseur de la tête 51 entre la tige 50 et les points d'ancrage 52 risque d'être délicate, elle est conditionnée par la durée de l'usinage lors de la réalisation de la tige 50 et des points d'ancrage 52. On risque de rencontrer des problèmes de manque de précision et de manque de reproductibilité.

En variante, il est possible d'utiliser un substrat SOI 201 à 203 pour réaliser la tige 50, les points d'ancrage 52 et seulement une partie la tête 51 du clou. L'usinage de la tige 50 et des points d'ancrage 52 se fait dans la couche la plus épaisse 201 de silicium en utilisant la couche isolante 202 comme couche d'arrêt.

L'épaisseur de la membrane ou des bras depuis le côté tige 50 jusqu'aux parties réfléchissantes 40 est parfaitement maîtrisée car elle correspond à celle de la couche 203 de silicium la moins épaisse du substrat SOI.

Les parties réfléchissantes 40 sont réalisées sur une couche isolante 204 formée à partir de la couche de silicium la moins épaisse 203. Il peut s'agir d'oxyde thermique. On se réfère à la figure 16A.

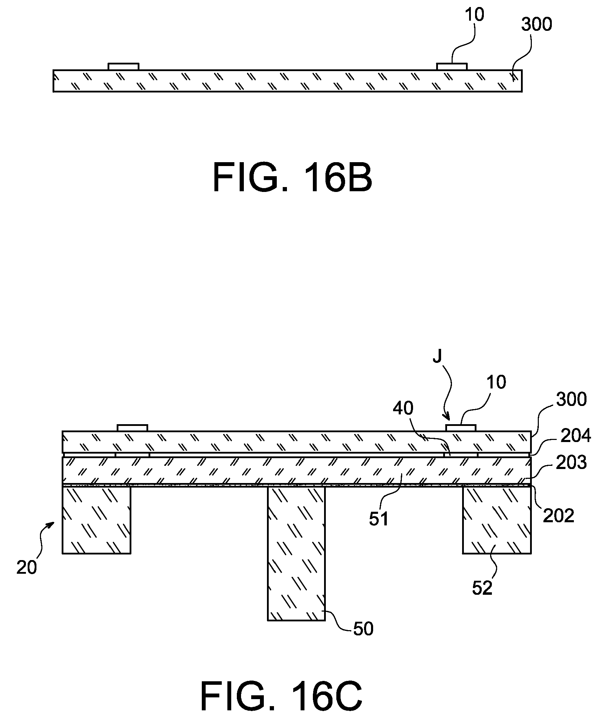

Sur un second substrat 300, on réalise les transducteurs piézoélectriques 10 (figure 16B).

Une méthode connue pour réaliser le transducteur à film piézoélectrique est de mettre en place sur le second support 300 une première électrode 10.2 par exemple par épitaxie, par pulvérisation cathodique ou par évaporation thermique, puis de déposer au-dessus le film piézoélectrique 10.1 par pulvérisation cathodique, par dépôt chimique en phase vapeur par organométallique, par épitaxie par jet moléculaire, par exemple, enfin de déposer l'autre électrode 10.3 comme la première.

Le second substrat 300 est assemblé au premier substrat en plaçant les parties réfléchissantes 40 à l'interface entre les deux substrats 201 à 203 et 300 et les transducteurs piézoélectriques 10 en surface (figure 16C). L'assemblage peut se faire par assemblage moléculaire, par thermo compression d'une couche ductile ou autre.

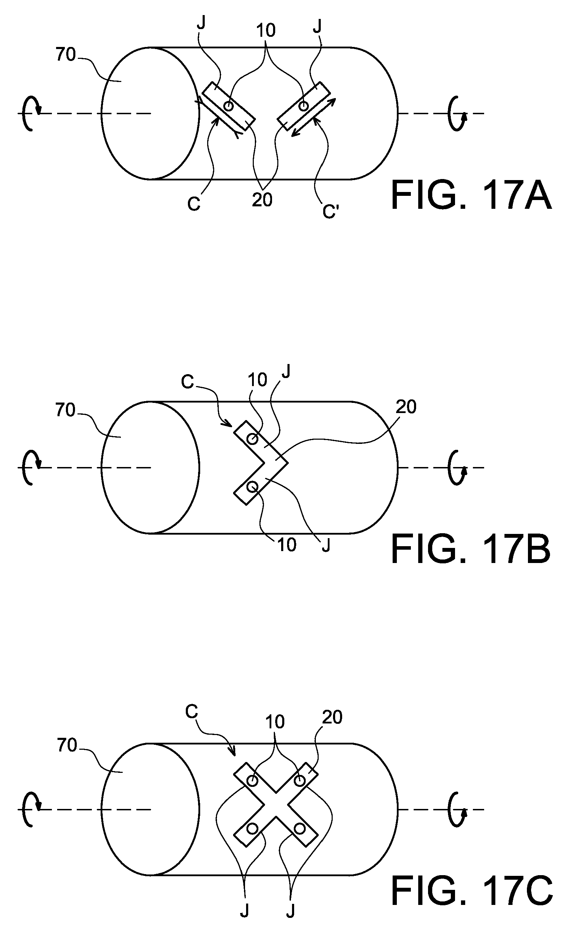

On peut utiliser plusieurs capteurs d'au moins un paramètre physique dotés chacun d'une seule jauge de contrainte selon l'invention ou un capteur d'au moins un paramètre physique à plusieurs jauges de contrainte sur un même support en tant que dispositif de mesure de couple. On se réfère aux figures 17A, 17B, 17C qui montrent une telle mesure de couple.

Il faut au moins deux jauges de contrainte pour mesurer un couple, l'une mesurera des contraintes en extension et l'autre mesurera des contraintes en compression.

On peut utiliser deux capteurs C, C' d'au moins un paramètre physique selon l'invention chacun possédant une seule jauge de contrainte J, ces capteurs étant fixés sur un objet 70 soumis à une torsion comme illustré sur la figure 17A. Les supports 20 des deux structures résonantes sont des lames allongées, l'un étant soumis à une extension et l'autre étant soumis à une compression. Les axes principaux des deux supports 20 sont sensiblement orthogonaux. Les transducteurs piézoélectriques des jauges de contrainte sont schématisés par des cercles 10.

Pour mesurer un couple, il est possible d'utiliser un seul capteur C selon l'invention doté de plusieurs jauges de contrainte J regroupées sur un même support 20, comme illustré sur les figures 17B ou 17C. Sur la figure 17B, le support 20 est une lame délimitée en V, les branche du V sont sensiblement orthogonales. Chacune des jauges de contrainte J est située sur une branche du V. Sur la figure 17C, le support est en forme de lame délimitée en X et possède quatre jauges de contrainte J. Plus précisément, il y a quatre résonateurs piézoélectriques 10 chacun étant disposé sur une branche du X. Les branches du X sont sensiblement orthogonales. On a ainsi réalisé un capteur de couple à double différentiel qui permet de réduire la sensibilité à l'erreur de positionnement.

Les supports 20 peuvent être réalisées dans du silicium usiné. L'orthogonalité est obtenue par lithographie et usinage et la précision de positionnement est relativement bonne. La structure en X est particulièrement robuste à l'erreur de positionnement. Sur ces figures, les parties réfléchissantes ne sont pas visibles.

Un tel capteur d'au moins une grandeur physique peut être utilisé pour faire une mesure de toute grandeur mécanique pouvant se traduire par un effet de compression et/ou d'extension sur le support telle une force, une pression, un couple, une accélération, un effet gyroscopique. En particulier, si la contrainte à mesurer dans une structure est homogène ou de signe constant selon son épaisseur, la jauge de contrainte selon l'invention et le capteur qui est doté d'au moins une telle jauge de contrainte permet un report simple et robuste sur la structure soumise aux contraintes. L'enterrement de la partie réfléchissante permet d'isoler le transducteur piézoélectrique du support sous contrainte et de maintenir les qualités de la résonance optimale.

Un tel capteur d'au moins un paramètre physique présente des avantages par rapport à un capteur réalisé par un résonateur à ondes de volume classique tel que celui illustré à la figure 2. Dans ces capteurs conventionnels on rencontrait un certains nombre d'inconvénients. Puisque on utilisait un seul matériau résonant par exemple le quartz pour réaliser la transduction, cela donnait peu de degrés de liberté en ce qui concerne la conception du capteur.

Le coefficient de couplage qui dépend de la coupe retenue et des conditions aux limites ne dépassait pas quelques pour mille.
Les fréquences d'utilisation restaient inférieures à environ 100 MHz.
L'exposition directe des deux faces du résonateur aux contraintes pouvait perturber le fonctionnement du capteur lui-même et accélérer son vieillissement.
Bien que plusieurs modes de réalisation de la présente invention aient été représentés et décrits de façon détaillée, on comprendra que différents changements et modifications puissent être apportés sans sortir du cadre de l'invention.

## Revendications

1. Jauge de contrainte de type structure résonante acoustique comportant un transducteur piézoélectrique (10) solidaire d'une face d'un support (20) soumis à la contrainte, **caractérisé en ce que** le support (20) comporte une fibre neutre médiane (30) située à une profondeur donnée de la face sur laquelle se trouve le transducteur piézoélectrique et loge en regard du transducteur piézoélectrique (10) une partie réfléchissante (40) enterrée dans le support destinée à réfléchir des ondes acoustiques de volume générées par le transducteur piézoélectrique (10) lorsqu'il est excité sur un mode harmonique de la structure, ces ondes acoustiques se propageant dans le support (20) et entrant en résonance, cette partie réfléchissante (40) étant placée à une distance du transducteur piézoélectrique (10) telle que l'intégrale de la contrainte sur la distance de propagation des ondes acoustiques de volume jusqu'à leur réflexion soit non nulle, et au plus profond à la profondeur de la fibre neutre.

2. Jauge de contrainte selon la revendication 1, dans laquelle la partie réfléchissante (40) est située à une profondeur d'environ 80% de la profondeur de la fibre neutre médiane (30).

3. Jauge de contrainte selon l'une des revendications précédentes, dans laquelle la partie réfléchissante (40) possède une taille et une forme sensiblement calquées sur celles du transducteur piézoélectrique (10).

4. Jauge de contrainte selon l'une des revendications précédentes, dans laquelle la partie réfléchissante (40) a une épaisseur ($\varepsilon$) sensiblement égale à environ dix pour cent de l'épaisseur ($\Sigma$) du support (20) au niveau du transducteur piézoélectrique (10) .

5. Jauge de contrainte selon l'une des revendications précédentes, dans laquelle le transducteur piézoélectrique (10) est coiffé d'une couche d'adaptation d'impédance (60).

6. Capteur d'au moins un paramètre physique, **caractérisé en ce qu'**il comporte une ou plusieurs jauges de contrainte selon l'une des revendications précédentes, les jauges de contraintes partageant le même support lorsque le capteur comporte plusieurs jauges de contrainte.

7. Capteur d'au moins un paramètre physique selon la revendication 6, dans lequel lorsqu'il comporte au moins deux jauges de contrainte, l'une des jauges de contrainte est destinée à être soumise à une contrainte en extension, l'autre jauge de contrainte du capteur est destinée à être soumise à une contrainte en compression, ces deux jauges de contrainte permettant de faire une mesure différentielle de manière à être compensée vis à vis de sources de perturbations corrélées telles qu'une variation de température.

8. Capteur selon la revendication 6, comportant au moins une jauge de contrainte, dite de référence, située dans une zone du support (20) soumise à sensiblement aucune contrainte.

9. Capteur selon la revendication 6, dans lequel, le support (20) est un clou avec une tige (50) surmontée par une tête (51) dotée de points d'ancrage (52) qui ont une position donnée par rapport à la tige (50) au repos et qui gardent cette position lorsque la tige (50) est sollicitée, une jauge de contrainte étant placée sur la tête (51) au voisinage de la tige (50) ou des points d'ancrage (52).

10. Capteur selon la revendication 6, dans lequel, le support (20) est une poutre encastrée à une extrémité et solidaire d'une masse sismique (80) à l'autre extrémité.

11. Capteur selon l'une des revendications 6 à 10, dans lequel, deux jauges de contraintes partagent une même partie réfléchissante (40), la partie réfléchissante (40) étant insérée entre deux transducteurs piézoélectriques (12, 13).

**12.** Capteur selon l'une des revendications 6 à 11, dans lequel le paramètre physique est une force, une pression, un couple, une accélération, un effet gyroscopique et éventuellement en plus une température un capteur de température (61) étant alors solidaire du support (20).

**13.** Procédé de fabrication d'une jauge de contrainte de type structure résonante acoustique comprenant la mise en place d'au moins un transducteur piézoélectrique (10) sur une face d'un support (20) comportant une fibre neutre médiane située à une profondeur donnée de la face sur laquelle se trouve le transducteur piézoélectrique et la réalisation au sein du support (20) d'au moins une partie réfléchissante (40) en regard du transducteur piézoélectrique (10), pour réfléchir des ondes acoustiques de volume générées par le transducteur piézoélectrique (10) lorsque le capteur est contraint, la partie réfléchissante (40) étant enterrée dans le support (10) et située de manière à ce que l'intégrale de la contrainte sur la distance de propagation des ondes acoustiques de volume jusqu'à leur réflexion soit non nulle, et au plus profond à la profondeur de la fibre neutre.

**14.** Procédé selon la revendication 13, dans lequel, le support (20) est formé par l'assemblage d'un premier substrat (101) à un second substrat (100), la partie réfléchissante (40) étant réalisée sur ou dans le premier substrat (101) avant l'assemblage de manière qu'elle soit à l'interface entre les deux substrats (101, 100) après assemblage, le second substrat (100) portant le transducteur piézoélectrique (10).

**15.** Procédé selon la revendication 14, dans lequel, lorsque la partie réfléchissante (40) est une cavité, elle est gravée dans le premier substrat (101).

**16.** Procédé selon la revendication 14, dans lequel, le premier substrat (201, 202, 203) est un substrat silicium sur isolant avec une couche isolante (202) prise en sandwich entre deux couches de silicium (201, 203) d'épaisseurs différentes, le support (20) étant délimité en partie par usinage de la couche de silicium (201) la plus épaisse et arrêt sur la couche isolante (202) et la partie réfléchissante (40) étant mise en place sur la couche de silicium la moins épaisse (203).

**17.** Procédé selon la revendication 13, dans lequel, lorsque le support (10) est réalisé à partir d'un substrat silicium sur isolant avec une couche isolante (202) prise en sandwich entre deux couches (201, 203) en silicium d'épaisseurs différentes, on réalise la partie réfléchissante (40) au sein de la couche isolante (202) supportée par la couche de silicium la plus épaisse (201) et on réalise le transducteur piézoélectrique (10) sur la couche de silicium la moins épaisse (203) qui est rapportée sur la couche isolante (202).

## Patentansprüche

**1.** Spannungsmessgerät vom Typ akustische Resonanzstruktur, umfassend einen piezoelektrischen Wandler (10), der mit einer Fläche eines der Spannung ausgesetzten Trägers (20) verbunden ist, **dadurch gekennzeichnet, dass** der Träger (20) eine neutrale mittlere Faser (30) umfasst, die in einer gegebenen Tiefe der Fläche angeordnet ist, auf der sich der piezoelektrische Wandler befindet, und gegenüber dem piezoelektrischen Wandler (10) ein reflektierendes Teil (40) aufnimmt, das in dem Träger vergraben und dazu ausgelegt ist, akustische Volumenwellen zu reflektieren, die von dem piezoelektrischen Wandler (10) erzeugt werden, wenn er bei einer harmonischen Mode der Struktur angeregt wird, wobei sich diese akustischen Wellen in dem Träger (20) ausbreiten und in Resonanz treten, wobei dieses reflektierende Teil (40) in einem derartigen Abstand von dem piezoelektrischen Wandler (10) platziert ist, dass die gesamte Spannung auf dem Ausbreitungsabstand der akustischen Volumenwellen bis zu ihrer Reflexion ungleich Null ist, und am tiefsten bei der Tiefe der neutralen Faser.

**2.** Spannungsmessgerät nach Anspruch 1, wobei das reflektierende Teil (40) bei einer Tiefe von ungefähr 80% der Tiefe der neutralen mittleren Faser (30) angeordnet ist.

**3.** Spannungsmessgerät nach einem der vorhergehenden Ansprüche, wobei das reflektierende Teil (40) eine Größe und eine Form besitzt, die im Wesentlichen jene des piezoelektrischen Wandlers (10) nachahmen.

**4.** Spannungsmessgerät nach einem der vorhergehenden Ansprüche, wobei das reflektieren Teil (40) eine Dicke ($\varepsilon$) im Wesentlichen gleich ungefähr 10 Prozent der Dicke ($\Sigma$) des Trägers (20) im Bereich des piezoelektrischen Wandlers (10) hat.

**5.** Spannungsmessgerät nach einem der vorhergehenden Ansprüche, wobei der piezoelektrische Wandler (10) von einer Impedanzanpassungsschicht (60) bedeckt ist.

6. Sensor für wenigstens einen physikalischen Parameter, **dadurch gekennzeichnet, dass** er ein oder mehrere Spannungsmessgeräte nach einem der vorhergehenden Ansprüche umfasst, wobei die Spannungsmessgeräte den gleichen Träger teilen, wenn der Sensor mehrere Spannungsmessgeräte umfasst.

7. Sensor für wenigstens einen physikalischen Parameter nach Anspruch 6, wobei dann, wenn er wenigstens zwei Spannungsmessgeräte umfasst, eines der Spannungsmessgeräte dazu ausgelegt ist, einer Dehnungsspannung ausgesetzt zu sein, und das andere Spannungsmessgerät des Sensors dazu ausgelegt ist, einer Stauchungsspannung ausgesetzt zu sein, wobei diese beiden Spannungsmessgeräte die Durchführung einer Differenzmessung derart erlauben, dass eine Kompensation hinsichtlich korrelierter Störungsquellen wie zum Beispiel einer Variation der Temperatur erfolgt.

8. Sensor nach Anspruch 6, umfassend wenigstens ein Spannungsmessgerät, genannt Referenz-Spannungsmessgerät, das in einer Zone des Trägers (20) angeordnet ist, die im Wesentlichen keiner Spannung ausgesetzt ist.

9. Sensor nach Anspruch 6, wobei der Träger (20) ein Nagel mit einer Stange (50) und einem daran montierten Kopf (51) ist, der mit Ankerpunkten (52) versehen ist, die eine gegebene Position bezüglich der Stange (50) in Ruhe haben, und die diese Position beibehalten, wenn die Stange (50) erregt wird, wobei ein Spannungsmessgerät auf dem Kopf (51) in der Nähe der Stange (50) oder der Ankerpunkte (52) platziert ist.

10. Sensor nach Anspruch 6, wobei der Träger (20) ein Balken ist, der an einem Ende eingespannt und am anderen Ende mit einer seismischen Masse (80) verbunden ist.

11. Sensor nach einem der Ansprüche 6 bis 10, wobei sich zwei Spannungsmessgeräte ein und dasselbe reflektierende Teil (40) teilen, wobei das reflektierende Teil (40) zwischen zwei piezoelektrischen Wandlern (12, 13) eingefügt ist.

12. Sensor nach einem der Ansprüche 6 bis 11, bei dem der physikalische Parameter eine Kraft, ein Druck, ein Moment, eine Beschleunigung, ein gyroskopischer Effekt und gegebenenfalls ferner eine Temperatur ist, wobei dann ein Temperatursensor (61) mit dem Träger (20) verbunden ist.

13. Verfahren zur Herstellung eines Spannungsmessgeräts vom Typ akustische Resonanzstruktur, umfassend das Platzieren wenigstens eines piezoelektrischen Wandlers (10) auf einer Fläche eines Trägers (20), umfassend eine neutrale mittlere Faser, die bei einer gegebenen Tiefe der Fläche angeordnet ist, auf der sich der piezoelektrische Wandler befindet, und das Realisieren, innerhalb des Trägers (20), wenigstens eines reflektierenden Teils (40) gegenüber dem piezoelektrischen Wandler (10), um akustische Volumenwellen zu reflektieren, die durch den piezoelektrischen Wandler (10) erzeugt werden, wenn der Sensor unter Spannung gerät, wobei das reflektierende Teil (40) in dem Träger (10) vergraben und derart angeordnet ist, dass die gesamte Spannung auf dem Ausbreitungsabstand der akustischen Volumenwellen bis zu ihrer Reflexion ungleich Null ist, und am tiefsten bei der Tiefe der neutralen Faser.

14. Verfahren nach Anspruch 13, wobei der Träger (20) durch Anbringen eines ersten Substrats (101) an einem zweiten Substrat (100) gebildet wird, wobei das reflektierende Teil (40) auf oder in dem ersten Substrat (101) vor dem Anbringen derart realisiert wird, dass es sich nach dem Anbringen an der Grenzfläche zwischen den zwei Substraten (101, 100) befindet, wobei das zweite Substrat (100) den piezoelektrischen Wandler (10) trägt.

15. Verfahren nach Anspruch 14, wobei dann, wenn das reflektierende Teil (40) ein Hohlraum ist, es in das erste Substrat (101) graviert wird.

16. Verfahren nach Anspruch 14, bei dem das erste Substrat (201, 202, 203) ein Siliziumsubstrat auf einem Isolator mit einer isolierenden Schicht (202) ist, die zwischen zwei Siliziumschichten (201, 203) mit unterschiedlichen Dicken sandwichartig eingefügt ist, wobei der Träger (20) teilweise durch Bearbeitung der dicksten Siliziumschicht (201) und Arretierung an der isolierenden Schicht (202) begrenzt ist, und das reflektierende Teil (40) auf der am wenigsten dicken Siliziumschicht (203) platziert ist.

17. Verfahren nach Anspruch 13, wobei dann, wenn der Träger (10) ausgehend von einem Siliziumsubstrat auf einem Isolator mit einer isolierenden Schicht (202) realisiert wird, die zwischen zwei Schichten (201, 203) aus Silizium mit unterschiedlichen Dicken sandwichartig eingefügt ist, man das reflektierende Teil (40) innerhalb der isolierenden Schicht (202) realisiert, getragen durch die dickste Siliziumschicht (201) und man den piezoelektrischen Wandler (10) auf der am wenigsten dicken Siliziumschicht (203) realisiert, die an der isolierenden Schicht (202) angebracht ist.

## Claims

1. Stress gauge of the type having an acoustic resonant structure including a piezoelectric transducer (10) connected to one face of a holder (20) subjected to the stress, **characterised in that** the holder (20) comprises a median neutral fibre (30) situated at a given depth of the face on which is located the piezoelectric transducer and includes opposite the piezoelectric transducer (10) a reflecting portion (40) imbedded in the holder intended to reflect volume acoustic waves generated by the piezoelectric transducer (10) when it is excited according to a harmonic mode of the structure, said acoustic waves propagating into the holder (20) and entering into resonance, said reflecting portion (40) being arranged at a distance from the piezoelectric transducer (10) such that the integral of the stress on the propagation distance of the volume acoustic waves up to their reflection is different from zero, and at the deepest at the depth of the neutral fibre.

2. Stress gauge according to claim 1, wherein the reflecting portion (40) is situated at a depth of around 80% of the depth of the median neutral fibre (30).

3. Stress gauge according to any of the preceding claims, wherein the reflecting portion (40) has a size and a form substantially copied from those of the piezoelectric transducer (10).

4. Stress gauge according to any of the preceding claims, wherein the reflecting portion (40) has a thickness (s) substantially equal to around ten per cent of the thickness ($\Sigma$) of the holder (20) at the level of the piezoelectric transducer (10).

5. Stress gauge according to any of the preceding claims, wherein the piezoelectric transducer (10) is crowned by an impedance matching layer (60).

6. Sensor of at least one physical parameter, **characterised in that** it comprises one or more stress gauges according to any of the preceding claims, the stress gauges sharing the same holder when the sensor comprises several stress gauges.

7. Sensor of at least one physical parameter according to claim 6, wherein when it comprises at least two stress gauges, one of the stress gauges is intended to be subjected to an extension stress, the other stress gauge of the sensor is intended to be subjected to a compression stress, said two stress gauges making it possible to carry out a differential measurement so as to be compensated vis-à-vis sources of correlated perturbations such as a temperature variation.

8. Sensor according to claim 6, comprising at least one stress gauge, known as reference gauge, situated in an area of the holder (20) subjected to substantially no stress.

9. Sensor according to claim 6, wherein the holder (20) is a nail with a stem (50) surmounted by a head (51) provided with anchoring points (52) that have a given position in relation to the stem (50) at rest and which keep this position when the stem (50) is stressed, a stress gauge being arranged on the head (51) in the vicinity of the stem (50) or anchoring points (52).

10. Sensor according to claim 6, wherein the holder (20) is a beam built-in at one end and connected to a seismic mass (80) at the other end.

11. Sensor according to anyone from claims 6 to 10, wherein two stress gauges share a same reflecting portion (40), the reflecting portion (40) being inserted between two piezoelectric transducers (12, 13).

12. Sensor according to anyone from claims 6 to 11, wherein the physical parameter is a force, a pressure, a torque, an acceleration, a gyroscopic effect and if necessary in addition a temperature.

13. Method of manufacturing a stress gauge of the type having an acoustic resonant structure comprising the putting in place of at least one piezoelectric transducer (10) on one face of a holder (20) comprising a median neutral fibre situated at a given depth of the face on which is located the piezoelectric transducer and the formation within the holder (20) of at least one reflecting portion (40) opposite the piezoelectric transducer (10), to reflect volume acoustic waves generated by the piezoelectric transducer (10) when the sensor is stressed, the reflecting portion (40) being imbedded in the holder (10) and situated so that the integral of the stress on the propagation distance of the volume acoustic waves up to their reflection is different from zero, and at the deepest at the depth of the neutral fibre.

**14.** Method according to claim 13, wherein the holder (20) is formed by the assembly of a first substrate (101) to a second substrate (100), the reflecting portion (40) being formed on or in the first substrate (101) before assembly in such a way that it is at the interface between the two substrates (101, 100) after assembly, the second substrate (100) bearing the piezoelectric transducer (10).

**15.** Method according to claim 21, wherein when the reflecting portion (40) is a cavity, it is etched in the first substrate (101).

**16.** Method according to claim 21, wherein the first substrate (201, 202, 203) is a silicon on insulator substrate with an insulating layer (202) sandwiched between two silicon layers (201, 203) of different thicknesses, wherein the holder (20) is delimited in part by machining of the thickest silicon layer (201) and stops on the insulating layer (202) and wherein the reflecting portion (40) is put in place on the thinnest silicon layer (203).

**17.** Method according to claim 13, wherein, when the holder (10) is made of a silicon on insulator substrate with an insulating layer (202) sandwiched between two silicon layers (201, 203) of different thicknesses, the reflecting portion (40) is formed within the insulating layer (202) supported by the thickest silicon layer (201) and the piezoelectric transducer (10) is formed on the thinnest silicon layer (203), which is brought back onto the insulating layer (202).

2
5
3
4
1
6
L

FIG. 1

7
9
e
F=n/(2s$_l$e)
8
x2
x3
x1

FIG. 2

C
L
x3
10.3
J
10.1
20.2
21
10
21
+e/2
10.2
x1
20.1
e
0
F
x2
-e/2
23
40
20
30
22

FIG. 3

20
23
40
20.2
20.1
F
$x_2$

FIG. 4

Contrainte tij(Pa)
T11
T22
T12
200000
150000
100000
50000
0
-50000
-100000
-150000
-200000
40
y
0,00035
0,0004
0,00045
0,0005
0,00055
0,0006
0,00065
x(M)
x
-e-0001
-8e-005
-6e-005
-4e-005
-2e-005
0
2e-005
4e-005
6e-005
8e-005
e-0001
y(M)

FIG. 5

J
10
60
10.3
10.1
10.2
61
100
ε
101
Σ
20
40
FIG. 6

13
14
J1
J2
100
101
40.1
40.2
20
70
71
FIG. 7A

J1
13
14
J2
100
101
40.1
40.2
20
70
71
FIG. 7B

85
J
10
20
30
20.2
40
z
y
x
80
20.1

FIG. 8A

85
J1
13
23
20
30
20.2
40
20.1
80
23'
14
J2
85

FIG. 8B

J
23
10.2
10.1
10.3
10
101
40.1
40.2
40
20
100

FIG. 9A

J
7
9
8
10
20
40

FIG. 9B

51
50
J
10
52
10

FIG. 10A

J
52
51
51.1
J
51.4
50
10
52
51.2
52
10
10
51.3
52

FIG. 10B

10
J
40
51
J
20
203
202
52
201
50
10

FIG. 10C

51.2
51
51.4
51.5
Y
Z
X
50
52
F

FIG. 11A

Y
51.4
51.2
51
51.5
Z
X
50
52
F

FIG. 11B

T11
Contraintes T11 (Pa)
30000
20000
10000
0
–10000
–20000
–30000
0.0001
9e–005
8e–005
7e–005
6e–005
5e–005
4e–005
3e–005
2e–005
1e–005
y (m)
–0.0015
–0.001
–0.0005
0
0.0005
0.001
0.0015
x (m)

FIG. 11C

T11
Contraintes T11 (Pa)
20000
15000
10000
5000
0
–5000
–10000
–15000
–20000
0.0001
9e–005
8e–005
7e–005
6e–005
5e–005
4e–005
3e–005
2e–005
1e–005
y (m)
–0.0015
–0.001
–0.0005
0
0.0005
0.001
0.0015
x (m)

FIG. 11D

10
51
20
40
52
50

FIG. 12A

T11
Contraintes T11 (Pa)
30000
20000
10000
0
−10000
−20000
−30000
−0.0015
−0.001
−0.0005
0
0.0005
0.001
0.0015
x (m)
0.0001
9e−005
8e−005
7e−005
6e−005
5e−005
4e−005
3e−005
2e−005
1e−005
y (m)

FIG. 12B

T11
Contraintes T11 (Pa)
30000
20000
10000
0
-10000
-20000
-30000
-0.0015
-0.001
-0.0005
0
0.0005
0.001
0.0015
x (m)
0.0001
9e-005
8e-005
7e-005
6e-005
5e-005
4e-005
3e-005
2e-005
1e-005
y (m)


FIG. 12C

T11
Contraintes T11 (Pa)
20000
15000
10000
5000
0
-5000
-10000
-15000
-20000
-0.0015
-0.001
-0.0005
0
0.0005
0.001
0.0015
x (m)
0.0001
9e-005
8e-005
7e-005
6e-005
5e-005
4e-005
3e-005
2e-005
1e-005
y (m)


FIG. 12D

$T_{11}$
Contraintes $T_{11}$ (Pa)
20000
15000
10000
5000
0
–5000
–10000
–15000
–20000
–0.0015
–0.001
–0.0005
0
0.0005
0.001
0.0015
x (m)
0.0001
9e–005
8e–005
7e–005
6e–005
5e–005
4e–005
3e–005
2e–005
1e–005
y (m)

FIG. 12E

J
51
51
10
20
40
40
52
50
Y
X
Z

FIG. 13A

T11
Contraintes T11 (Pa)
30000
20000
10000
0
–10000
–20000
–30000
–0.0015
–0.001
–0.0005
0
0.0005
0.001
0.0015
x (m)
0.0001
9e–005
8e–005
7e–005
6e–005
5e–005
4e–005
3e–005
2e–005
1e–005
y (m)


FIG. 13B

T11
Contraintes T11 (Pa)
30000
20000
10000
0
–10000
–20000
–30000
–0.0015
–0.001
–0.0005
0
0.0005
0.001
0.0015
x (m)
0.0001
9e–005
8e–005
7e–005
6e–005
5e–005
4e–005
3e–005
2e–005
1e–005
y (m)


FIG. 13C

$T_{11}$
Contraintes $T_{11}$ (Pa)
20000
15000
10000
5000
0
–5000
–10000
–15000
–20000
–0.0015
–0.001
–0.0005
0
0.0005
0.001
0.0015
x (m)
0.0001
9e–005
8e–005
7e–005
6e–005
5e–005
4e–005
3e–005
2e–005
1e–005
y (m)

FIG. 13D

$T_{11}$
Contraintes $T_{11}$ (Pa)
20000
15000
10000
5000
0
–5000
–10000
–15000
–20000
–0.0015
–0.001
–0.0005
0
0.0005
0.001
0.0015
x (m)
0.0001
9e–005
8e–005
7e–005
6e–005
5e–005
4e–005
3e–005
2e–005
1e–005
y (m)

FIG. 13E

T11
150000
100000
50000
0
-50000
-100000
-150000
Contraintes T11 (Pa)
150000
100000
50000
0
-50000
-100000
-150000
-0.0015
-0.001
-0.0005
0
0.0005
0.001
0.0015
x (m)
5e-005
4.5e-005
4e-005
3.5e-005
3e-005
2.5e-005
2e-005
1.5e-005
1e-005
y (m)

FIG. 14A

T11
500000
400000
300000
200000
100000
0
-100000
-200000
-300000
-400000
-500000
Contraintes T11 (Pa)
500000
400000
300000
200000
100000
0
-100000
-200000
-300000
-400000
-500000
-0.003
-0.002
-0.001
0
0.001
0.002
0.003
x (m)
5e-005
4.5e-005
4e-005
3.5e-005
3e-005
2.5e-005
2e-005
1.5e-005
1e-005
y (m)

FIG. 14B

dans l'air
dans l'eau
1,6e+21
1,4e+21
1,2e+21
1e+21
8e+20
6e+20
2e+20
4e+20
0
434
434,1
434,2
434,3
434,4
434,5
434,6
434,7
434,8

FIG. 15

204
203
202
201

FIG. 16A

10
300

FIG. 16B

J
10
300
40
204
203
51
202
20
52
50

FIG. 16C

J
10
J
70
C
20
C'

FIG. 17A

C
10
J
70
20
10
J

FIG. 17B

C
10
20
70
J
J

FIG. 17C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4479070 B
- EP 0117387 A
- US 4484475 A
- FR 2739925
- FR 2889375 A
- EP 1275949 A


### Littérature non-brevet citée dans la description


- Wave propagation in fluids and solids. R.N. Thurston dans Physical Acoustics. Academic Press, 1964, vol. 1
- **J. C BAUMHAUER ; H. F TIERSTEN.** *J. Acoust. Soc. Am.,* vol. 54, 1017
- **B. K SIHNA ; H. F TIERSTEN.** First derivatives of the fundamental elastic constants of quartz. *J. of Applied Physics,* 1979, vol. 50 (4), 2732
- **E. BIGLER ; S. BALLANDRAS.** Stress sensitivity coefficients : a général approach for bulk, rayleigh and surface transverse waves. *Proc. Of IEEE IFCS,* Juin 1996
- **S. TIMOSHENKO ; R. GOODIER.** Theory of elasticity. Mc Graw-Hill Edition, 1970
- **S. BALLANDRAS ; E. BIGLER.** Surface acoustic wave devices with low sensitivity to mechanical and thermoelastic stresses. *Journal of Applied Physics,* 1992, vol. 72 (88), 3272-3281